# EUROPEAN PATENT APPLICATION

(11) **EP 4 589 430 A1**
(43) Date of publication of application: **23.07.2025**
(21) Application number: 24220957.5
(22) Date of filing: 18.12.2024
(51) Int. Cl.: G06F 9/451, G06N 20/00, G06Q 10/20, G09B 19/24

(54) **SYSTEMS, APPARATUSES, METHODS, AND COMPUTER PROGRAM PRODUCTS FOR INITIATING PERFORMANCE OF ONE OR MORE ENTERPRISE OPERATIONS ACTIONS**

(30) Priority: 16.01.2024 US 202418414024
(71) Applicant: Vocollect, Inc., Pittsburgh, Pennsylvania 15235 (US)
(72) Inventor: JOSEPH, Delbert A., Charlotte, 28202 (US); HOLDCROFT, Raymond, Charlotte, 28202 (US)
(74) Representative: Haseltine Lake Kempner LLP

(57) **Abstract**

Systems, apparatuses, methods, and computer program products are provided herein. For example, an embodiment described herein includes an enterprise operations system. In some embodiments, the enterprise operations system may include an edge enterprise operations device configured to receive at least a first portion of enterprise implementation data from at least one of the one or more edge supported wearable devices. In some embodiments, the edge enterprise operations device may be configured to generate, based at least in part on applying the server enterprise operations data and the enterprise implementation data to a composite edge enterprise operations machine learning model, edge enterprise operations data. In some embodiments, the edge enterprise operations device may be configured to initiate performance of one or more edge enabled enterprise operations actions based at least in part on the edge enterprise operations data.

## Description

### TECHNOLOGICAL FIELD

Embodiments of the present disclosure relate generally to systems, apparatuses, methods, and computer program products for initiating performance of one or more enterprise operations actions.

### BACKGROUND

Applicant has identified many technical challenges and difficulties associated with systems, apparatuses, methods, and computer program products for initiating performance of one or more enterprise operations actions. Through applied effort, ingenuity, and innovation, Applicant has solved problems related to systems, apparatuses, methods, and computer program products for initiating performance of one or more enterprise operations actions by developing solutions embodied in the present disclosure, which are described in detail below.

### BRIEF SUMMARY

Various embodiments described herein relate to systems, apparatuses, methods, and computer program products for initiating performance of one or more enterprise operations actions.

In accordance with one aspect of the disclosure, an enterprise operations system is provided. In some embodiments, the enterprise operations system comprises one or more edge supported wearable devices in which at least one of the one or more edge supported wearable devices comprises at least one processor and at least one non-transitory memory including computer-coded instructions thereon. In some embodiments, the enterprise operations system comprises an edge enterprise operations device in which the edge enterprise operations device comprises at least one processor and at least one non-transitory memory including computer-coded instructions thereon. In some embodiments, the computer-coded instructions, with the at least one processor, cause the edge enterprise operations device to receive server enterprise operations data from an enterprise operations server. In some embodiments, the computer-coded instructions, with the at least one processor, cause the edge enterprise operations device to receive at least a first portion of enterprise implementation data from at least one of the one or more edge supported wearable devices. In some embodiments, the computer-coded instructions, with the at least one processor, cause the edge enterprise operations device to generate, based at least in part on applying the server enterprise operations data and the enterprise implementation data to a composite edge enterprise operations machine learning model, edge enterprise operations data. In some embodiments, the computer-coded instructions, with the at least one processor, cause the edge enterprise operations device to initiate performance of one or more edge enabled enterprise operations actions based at least in part on the edge enterprise operations data.

In some embodiments, the edge enterprise operations device is physically located at an asset.

In some embodiments, the computer-coded instructions, with the at least one processor, cause the edge enterprise operations device to receive at least a second portion of enterprise implementation data from one or more image capture devices associated with the asset.

In some embodiments, the enterprise operations server is physically located at a remote location and in communication with the edge enterprise operations device via at least a network.

In some embodiments, the composite edge enterprise operations machine learning model comprises an edge audio processing machine learning model.

In some embodiments, the composite edge enterprise operations machine learning model comprises an edge image processing machine learning model.

In some embodiments, the composite edge enterprise operations machine learning model comprises an edge generative machine learning model.

In some embodiments, the composite edge enterprise operations machine learning model comprises an edge impact and event machine learning model.

In some embodiments, at least one of the one or more edge supported wearable devices comprises at least one processor and at least one non-transitory memory including computer-coded instructions thereon, the computer coded instructions, with the at least one processor, cause the at least one of the one or more edge supported wearable devices to generate the first portion of the enterprise implementation data. In some embodiments, generating the first portion of the enterprise implementation data includes capturing the first portion of the enterprise implementation data.

In some embodiments, at least one of the one or more edge supported wearable devices comprises at least one processor and at least one non-transitory memory including computer-coded instructions thereon, the computer coded instructions, with the at least one processor, cause the at least one of the one or more edge supported wearable devices to generate the first portion of the enterprise implementation data. In some embodiments, generating the first portion of the enterprise implementation data includes capturing the first portion of the enterprise implementation data. In some embodiments, generating the first portion of the enterprise implementation data includes processing the enterprise implementation data using a wearable device machine learning model.

In some embodiments, at least one of the one or more edge supported wearable devices comprises at least one processor and at least one non-transitory memory including computer-coded instructions thereon, the computer coded instructions, with the at least one processor, cause the at least one of the one or more edge supported wearable devices to generate the first portion of the enterprise implementation data. In some embodiments, generating the first portion of the enterprise implementation data includes capturing the first portion of the enterprise implementation data. In some embodiments, the computer-coded instructions, with the at least one processor, cause the at least one of the one or more edge supported wearable devices to generate, based at least in part on applying the first portion of the enterprise implementation data to a wearable device machine learning model, wearable enterprise operations data. In some embodiments, the computer-coded instructions, with the at least one processor, cause the at least one of the one or more edge supported wearable devices to initiating performance of one or more wearable enabled enterprise operations actions based at least in part on the wearable enterprise operations data.

In some embodiments, the wearable device machine learning model comprises a wearable device large language model.

In accordance with another aspect of the disclosure, a method is provided. In some embodiments, the method may include receiving server enterprise operations data from an enterprise operations server. In some embodiments, the method may include receiving at least a first portion of enterprise implementation data from at least one of one or more edge supported wearable devices. In some embodiments, the method may include generating, at least in part on applying the server enterprise operations data and the enterprise implementation data to a composite edge enterprise operations machine learning model, edge enterprise operations data. In some embodiments, the method may include initiating performance of one or more edge enabled enterprise operations actions based at least in part on the edge enterprise operations data.

In some embodiments, the composite edge enterprise operations machine learning model comprises an edge audio processing machine learning model.

In some embodiments, the composite edge enterprise operations machine learning model comprises an edge image processing machine learning model.

In some embodiments, the composite edge enterprise operations machine learning model comprises an edge generative machine learning model.

In some embodiments, the composite edge enterprise operations machine learning model comprises an edge impact and event machine learning model.

In some embodiments, the edge enterprise operations device is physically located at an asset.

In some embodiments, the enterprise operations server is physically located at a remote location and in communication with the edge enterprise operations device via at least a network.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product to receive server enterprise operations data from an enterprise operations server. In some embodiments, the computer program code, in execution with at least one processor, configures the computer program product to receive at least a first portion of enterprise implementation data from at least one of one or more edge supported wearable devices. In some embodiments, the computer program code, in execution with at least one processor, configures the computer program product to generate, based at least in part on applying the server enterprise operations data and the enterprise implementation data to a composite edge enterprise operations machine learning model, edge enterprise operations data. In some embodiments, the computer program code, in execution with at least one processor, configures the computer program product to initiate performance of one or more edge enabled enterprise operations actions based at least in part on the edge enterprise operations data.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example block diagram of an environment in which embodiments of the present disclosure may operate;
FIG. 2 illustrates an example block diagram of an example apparatus that may be specially configured in accordance with an example embodiment of the present disclosure;
FIG. 3 illustrates an example visualization of an enterprise operations system in accordance with one or more embodiments of the present disclosure;
FIG. 4 illustrates an example block diagram of a composite edge enterprise operations machine learning model in accordance with one or more embodiments of the present disclosure;
FIG. 5 illustrates an example block diagram of a wearable device machine learning model in accordance with one or more embodiments of the present disclosure;
FIG. 6 illustrates an example edge supported wearable device in accordance with one or more embodiments of the present disclosure;
FIG. 7 illustrates another example edge supported wearable device in accordance with one or more embodiments of the present disclosure;
FIG. 8 illustrates another example edge supported wearable device in accordance with one or more embodiments of the present disclosure;
FIG. 9 illustrates another example edge supported wearable device in accordance with one or more embodiments of the present disclosure;
FIG. 10 illustrates a flowchart of an example method in accordance with one or more embodiments of the present disclosure; and
FIG. 11 illustrates a flowchart of another example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Additionally, or alternatively, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with systems, apparatuses, methods, and computer program products for initiating performance of one or more enterprise operations actions. As would be understood by one skilled in the field to which this disclosure pertains, there are numerous example scenarios in which a user may use systems, apparatuses, methods, and computer program products for initiating performance of one or more enterprise operations actions.

In many applications, it may be desirable to initiate performance of one or more enterprise operations actions. For example, it may be desirable to initiate performance of one or more enterprise operations actions to perform operations associated with one or more assets. Example solutions for initiating performance of one or more enterprise operations actions generally include identifying an item that could be addressed by performing an enterprise operation action, designing an enterprise operation action to address the item, and performing the enterprise operation action, which is inefficient and resource intensive. For example, in such example solutions, there is no way to automatically generate one or more enterprise operations actions based on previous related and partially related enterprise operations actions. As a result, such example solutions are inefficient and resource intensive because each time an item is identified, an enterprise operations action must be individually generated. As another example, in such example solutions there is no way to automatically initiate performance of enterprise operations actions by one component of a system (e.g., an edge supported wearable operations device) that has been generated by another component of the system (e.g., an edge enterprise operations device and/or edge enterprise operations server). As such, such example solutions are inefficient and resource intensive because there is no way to leverage an entire system to generate enterprise operations actions and then initiate performance of the generated enterprise operations actions by an optimized component of the system.

Thus, to address these and/or other issues related to initiating performance of one or more enterprise operations actions, example systems, apparatuses, computer program products, and/or methods are disclosed herein. For example, an embodiment described herein includes an enterprise operations system. In some embodiments, the enterprise operations system may include one or more edge supported wearable devices and an edge enterprise operations device. In some embodiments, the edge enterprise operations device may be configured to receive server enterprise operations data from an enterprise operations server. In some embodiments, the edge enterprise operations device may be configured to receive at least a first portion of enterprise implementation data from at least one of the one or more edge supported wearable devices. In some embodiments, the edge enterprise operations device may be configured to generate, based at least in part on applying the server enterprise operations data and the enterprise implementation data to a composite edge enterprise operations machine learning model, edge enterprise operations data. In some embodiments, the edge enterprise operations device may be configured to initiate performance of one or more edge enabled enterprise operations actions based at least in part on the edge enterprise operations data. Accordingly, the systems, apparatuses, computer program products, and/or methods disclosed herein enable initiating performance of one or more enterprise operations actions in an efficient manner with low resource consumption.

### Example Systems and Apparatuses

Embodiments of the present disclosure herein include systems, apparatuses, methods, and computer program products configured for initiating performance of one or more enterprise operations actions. In some embodiments, one or more enterprise operations actions may include one or more of server enabled enterprise operations actions, edge enabled enterprise operations actions, and/or wearable enabled enterprise operations actions. In this regard, embodiments of the present disclosure herein include systems, apparatuses, methods, and computer program products configured for initiating performance of one or more of server enabled enterprise operations actions, edge enabled enterprise operations actions, and/or wearable enabled enterprise operations actions. It should be readily appreciated that the embodiments of the apparatus, systems, methods, and computer program product described herein may be configured in various additional and alternative manners in addition to those expressly described herein.

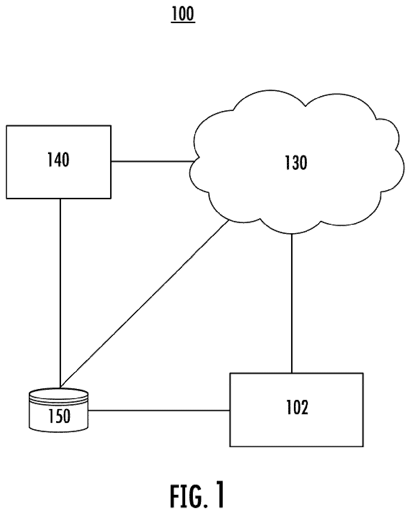

FIG. 1 illustrates an exemplary block diagram of an environment 100 in which embodiments of the present disclosure may operate. Specifically, FIG. 1 illustrates an asset 102. In some embodiments, for example, the asset 102 may be any type of location associated with a user performing one or more one or more enterprise operations actions, such as one or more of server enabled enterprise operations actions, edge enabled enterprise operations actions, and/or wearable enabled enterprise operations actions. In this regard, the asset 102 may, for example, be a warehouse, machine shop, maintenance center, health care building, distribution center, industrial plant, a retail store, a geographic location, and/or the like. Although FIG. 1 depicts the environment 100 as including one asset 102, it would be understood by one skilled in the field to which this disclosure pertains that the environment may include more than one asset 102. For example, the environment 100 may include three assets.

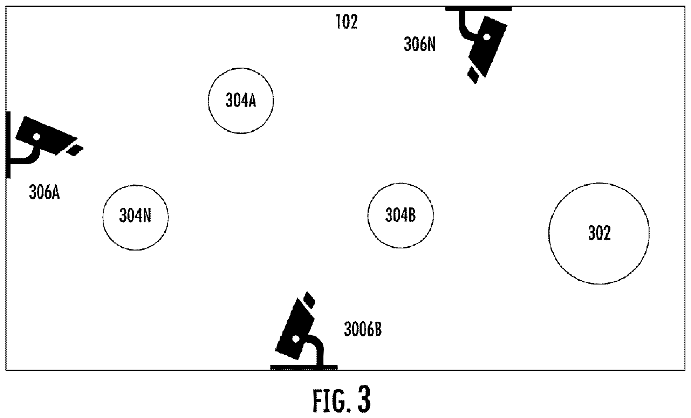

In some embodiments, such as illustrated in FIG. 3, an edge enterprise operations device 302 may be associated with the asset 102. In this regard, for example, the edge enterprise operations device 302 may be physically located at the asset 102. In some embodiments, the edge enterprise operations device 302 may be configured to at least in part initiate performance of one or more enterprise operations actions. For example, the edge enterprise operations device 302 may be configured to at least in part initiate performance of one or more edge enabled enterprise operations actions. The edge enterprise operations device 302 may be electronically and/or communicatively coupled to the asset 102, the enterprise operations server 140, one or more edge supported wearable devices 304A-304N, one or more image capture devices 306A-306N, individual components of the asset 102, and/or one or more databases 150. In some embodiments, the edge enterprise operations device 302 may be configured to be electronically and/or communicatively decoupled from the enterprise operations server 140 for at least a time period (e.g., the edge enterprise operations device 302 may be air gapped from the enterprise operations server 140 for a time period). For example, the edge enterprise operations device 302 may be configured to be electronically and/or communicatively decoupled from the enterprise operations server 140 for at least a time period when a connection between the edge enterprise operations device 302 and the enterprise operations server 140 is unstable and/or not in operation (e.g., when the network 130 is unstable and/or not in operation). As another example, the edge enterprise operations device 302 may be configured to be electronically and/or communicatively decoupled from the enterprise operations server 140 for at least a time period to increase the data security of the edge enterprise operations device 302 (e.g., when the edge enterprise operations device 302 is performing sensitive operations).

In some embodiments, the edge enterprise operations device 302 is configured via hardware, software, firmware, and/or a combination thereof, to perform data intake of one or more types of data associated with initiating performance of one or more enterprise operations actions. Additionally, or alternatively, in some embodiments, the edge enterprise operations device 302 is configured via hardware, software, firmware, and/or a combination thereof, to generate and/or transmit command(s) associated with initiating performance of one or more enterprise operations actions. Additionally, or alternatively still, in some embodiments, the edge enterprise operations device 302 is configured via hardware, software, firmware, and/or a combination thereof, to perform data reporting and/or other data output process(es) associated with initiating performance of one or more enterprise operations actions. For example, in various embodiments, the edge enterprise operations device 302 may be configured to execute and/or perform one or more operations and/or functions described herein. Additionally, or alternatively, in some embodiments, the edge enterprise operations device 302 is configured via hardware, software, firmware, and/or a combination thereof, to perform data storage (e.g., data storage of data associated with initiating performance of one or more enterprise operations actions).

In some embodiments, the one or more edge supported wearable devices 304A-304N may be associated with the asset 102. In this regard, for example, the one or more edge supported wearable devices 304A-304N may be physically located at the asset 102. In some embodiments, each of the one or more edge supported wearable devices 304A-304N may be associated with a user. For example, each of the one or more edge supported wearable devices 304A-304N may be associated with a user performing one or more workflow routines. In some embodiments, the edge enterprise operations device 302 and the one or more edge supported wearable devices 304A-304N may together form an enterprise operations system.

In some embodiments, the one or more of the one or more edge supported wearable devices 304A-304N may be configured to at least in part initiate performance of one or more enterprise operations actions. The one or more edge supported wearable devices 304A-304N may be electronically and/or communicatively coupled to the asset 102, the enterprise operations server 140, the edge enterprise operations device 302, the one or more image capture devices 306A-306N, individual components of the asset 102, and/or one or more databases 150. In some embodiments, the one or more edge supported wearable devices 304A-304N are configured via hardware, software, firmware, and/or a combination thereof, to perform data intake of one or more types of data associated with initiating performance of one or more enterprise operations actions. Additionally, or alternatively, in some embodiments, the one or more edge supported wearable devices 304A-304N are configured via hardware, software, firmware, and/or a combination thereof, to generate and/or transmit command(s) associated with initiating performance of one or more enterprise operations actions. Additionally, or alternatively still, in some embodiments, the one or more edge supported wearable devices 304A-304N are configured via hardware, software, firmware, and/or a combination thereof, to perform data reporting and/or other data output process(es) associated with initiating performance of one or more enterprise operations actions. For example, in various embodiments, the one or more edge supported wearable devices 304A-304N may be configured to execute and/or perform one or more operations and/or functions described herein. Additionally, or alternatively, in some embodiments, the one or more edge supported wearable devices 304A-304N are configured via hardware, software, firmware, and/or a combination thereof, to perform data storage (e.g., data storage of data associated with initiating performance of one or more enterprise operations actions).

In some embodiments, the one or more image capture devices 306A-306N may be associated with the asset 102. In this regard, for example, the one or more image capture devices 306A-306N may be physically located at the asset 102. In some embodiments, the one or more image capture devices 306A-306N may be configured to at least in part initiate performance of one or more enterprise operations actions. The one or more image capture devices 306A-306N may be electronically and/or communicatively coupled to the asset 102, the enterprise operations server 140, one or more edge supported wearable devices 304A-304N, the edge enterprise operations device, individual components of the asset 102, and/or one or more databases 150. In some embodiments, the one or more image capture devices 306A-306N are configured via hardware, software, firmware, and/or a combination thereof, to perform data intake of one or more types of data associated with initiating performance of one or more enterprise operations actions. Additionally, or alternatively, in some embodiments, the one or more image capture devices 306A-306N are configured via hardware, software, firmware, and/or a combination thereof, to generate and/or transmit command(s) associated with initiating performance of one or more enterprise operations actions. Additionally, or alternatively still, in some embodiments, the one or more image capture devices 306A-306N are configured via hardware, software, firmware, and/or a combination thereof, to perform data reporting and/or other data output process(es) associated with initiating performance of one or more enterprise operations actions. For example, in various embodiments, the one or more image capture devices 306A-306N may be configured to execute and/or perform one or more operations and/or functions described herein. Additionally, or alternatively, in some embodiments, the one or more image capture devices 306A-306N are configured via hardware, software, firmware, and/or a combination thereof, to perform data storage (e.g., data storage of data associated with initiating performance of one or more enterprise operations actions).

The network 130 may be embodied in any of a myriad of network configurations. In some embodiments, the network 130 may be a public network (e.g., the Internet). In some embodiments, the network 130 may be a private network (e.g., an internal localized, or closed-off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

In some embodiments, the environment 100 may include an enterprise operations server 140. In some embodiments, for example, the enterprise operations server 140 may be configured to at least in part initiate performance of one or enterprise operations actions. The enterprise operations server 140 may be electronically and/or communicatively coupled to the asset 102, the edge enterprise operations device 302, the edge supported wearable devices 304A-304N, one or more image capture devices 306A-306N, individual components of the asset 102, and/or one or more databases 150. The enterprise operations server 140 may be located remotely, in proximity of, and/or within the asset 102. In some embodiments, the enterprise operations server 140 may be located at remote location (e.g., remote location from the asset 102) and in communication with the edge enterprise operations device 302 via the network 130 and/or in communication with one or more of the one or more edge supported wearable devices 304A-304N via the network 130 (e.g., the enterprise operations server 140 is a cloud-based enterprise operations server). Additionally, or alternatively, the enterprise operations server 140 may be physically located at the asset 102 and in communication with the edge enterprise operations device 302 via Wi-Fi, Bluetooth, and/or a physical connection (e.g., a wire) and/or in communication with one or more of the one or more edge supported wearable devices 304A-304N via Wi-Fi, Bluetooth, and/or a physical connection (e.g., a wire).

In some embodiments, the enterprise operations server 140 is configured via hardware, software, firmware, and/or a combination thereof, to perform data intake of one or more types of data associated with initiating performance of one or more enterprise operations actions. Additionally, or alternatively, in some embodiments, the enterprise operations server 140 is configured via hardware, software, firmware, and/or a combination thereof, to generate and/or transmit command(s) associated with initiating performance of one or more enterprise operations actions. Additionally, or alternatively still, in some embodiments, the enterprise operations server 140 is configured via hardware, software, firmware, and/or a combination thereof, to perform data reporting and/or other data output process(es) associated with initiating performance of one or more enterprise operations actions. For example, in various embodiments, the enterprise operations server 140 may be configured to execute and/or perform one or more operations and/or functions described herein. Additionally, or alternatively, in some embodiments, the enterprise operations server 140 is configured via hardware, software, firmware, and/or a combination thereof, to perform data storage (e.g., data storage of data associated with initiating performance of one or more enterprise operations actions).

The one or more databases 150 may be configured to receive, store, and/or transmit data. In some embodiments, the one or more databases 150 may be associated with server enterprise operations data, edge enterprise operations data, wearable enterprise operations data enterprise implementation data, and/or the like. In some embodiments, the server enterprise operations data, edge enterprise operations data, wearable enterprise operations data enterprise implementation data may be received from the enterprise operations server 140, the one or more edge supported wearable devices 304A-304N, the edge enterprise operations device 302, and/or the one or more image capture devices 306A-306N. In this regard, for example, the enterprise operations server 140, the one or more edge supported wearable devices 304A-304N, the edge enterprise operations device 302, and/or the one or more image capture devices 306A-306N may have one or more sensors that capture server enterprise operations data, edge enterprise operations data, wearable enterprise operations data enterprise implementation data and/or one or more datastores that store server enterprise operations data, edge enterprise operations data, wearable enterprise operations data enterprise implementation data.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the enterprise operations server 140 may include the one or more databases 150.

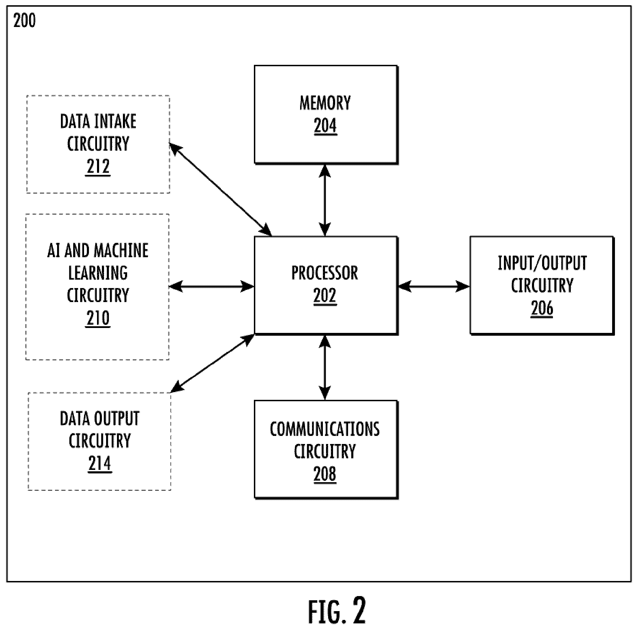

FIG. 2 illustrates an exemplary block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, enterprise operations server 140, the one or more edge supported wearable devices 304A-304N, the edge enterprise operations device 302, and/or the one or more image capture devices 306A-306N. The apparatus 200 includes processor 202, memory 204, input/output circuitry 206, communications circuitry 208, and/or artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of the enterprise operations server 140, the one or more edge supported wearable devices 304A-304N, the edge enterprise operations device 302, and/or the one or more image capture devices 306A-306N may refer to, for example, one or more computers, computing entities, desktop computers, mobile phones, tablets, phablets, notebooks, laptops, distributed systems, servers, wearable devices, headphones, headsets, smart watches, cameras, image capture devices, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with initiating performance of one or more enterprise operations actions. In some embodiments, the data intake circuitry 212 includes hardware, software, firmware, and/or a combination thereof, that communicates with one or more sensor(s) component(s), and/or the like to receive particular data associated with initiating performance of one or more enterprise operations actions. Additionally, or alternatively, in some embodiments, the data intake circuitry 212 includes hardware, software, firmware, and/or a combination thereof, that retrieves particular data associated with initiating performance of one or more enterprise operations actions from one or more data repository/repositories accessible to the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

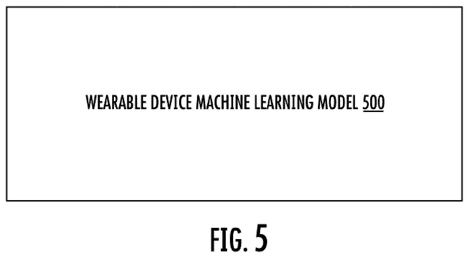

With reference to FIGS. 1-9, in some embodiments, the enterprise operations server 140 may be configured to generate server enterprise operations data. For example, the enterprise operations server 140 may be configured to generate server enterprise operations data and provide it to the edge enterprise operations device 302.

In some embodiments, the server enterprise operations data may be one or more items of data representative of and/or associated with one or more server enabled enterprise operations actions. In some embodiments, a server enabled enterprise operations action may be one or more actions that may be performed by a user associated with the enterprise operations server 140, the edge enterprise operations device 302, the one or more edge supported wearable devices 304A-304N, and/or the asset 102 that is enabled at least in part by the enterprise operations server 140. For example, when the asset 102 is a warehouse, a server enabled enterprise operations action may include picking an item from a location that has at least in part been enabled by the enterprise operations server 140 (e.g., the enterprise operations server 140 generated instructions for picking the item).

In some embodiments, a server enabled workflow routine may include a plurality of server enabled enterprise operations actions. In some embodiments, a server enabled workflow routine may correspond to a task that may be performed by a user associated with the enterprise operations server 140, the edge enterprise operations device 302, the one or more edge supported wearable devices 304A-304N, and/or the asset 102 (e.g., and/or multiple assets when the environment 102 includes more than one asset 102) that is enabled at least in part by the enterprise operations server 140. Said differently, server enabled enterprise operations actions may correspond to one or more steps or intermediate tasks that may be performed by a user associated with the enterprise operations server 140, the edge enterprise operations device 302, the one or more edge supported wearable devices 304A-304N, and/or the asset 102 to complete a server enabled workflow routine.

In some embodiments, for example, a server enabled workflow routine may include modifying a component in an engine (e.g., when the asset 102 is a maintenance shop) and is enabled at least in part by the enterprise operations server 140. In this regard, for example, a server enabled enterprise operations action in a server enabled workflow routine may include removing fasteners attached to the engine component to provide access to the engine component that is being modified. As another example, a server enabled workflow routine may include packaging an item for transport (e.g., when the asset 102 is a distribution center) and is enabled at least in part by the enterprise operations server 140. In this regard, for example, a server enabled enterprise operations action in the server enabled workflow routine may include constructing a box for the item in which the item will be transferred. As another example, a server enabled workflow routine may include performing a medical procedure (e.g., when the asset 102 is a healthcare center) and is enabled at least in part by the enterprise operations server 140. In this regard, for example, a server enabled enterprise operations action in the server enabled workflow routine may include identifying equipment needed for the medical procedure. As another example, a server enabled workflow routine may include picking and transporting items (e.g., when the asset 102 is a warehouse) and is enabled at least in part by the enterprise operations server 140. In this regard, for example, a server enabled enterprise operations action in the server enabled workflow routine may include moving to a first location associated with a first item to be picked. As another example, a server enabled workflow routine may include performing an industrial process (e.g., when the asset 102 is an industrial plant) and is enabled at least in part by the enterprise operations server 140. In this regard, for example, a server enabled enterprise operations action in the server enabled workflow routine may include combining raw ingredients used in the industrial process.

In some embodiments, the enterprise operations server 140 may be configured to initiate performance of one or more server enabled enterprise operations actions. In some embodiments, the enterprise operations server 140 may be configured to initiate performance of one or more server enabled enterprise operations actions based at least in part on server enterprise operations data. In some embodiments, the enterprise operations server 140 may be configured to initiate performance of one or more server enabled enterprise operations actions by providing server enterprise operations data to the edge enterprise operations device 302. For example, the enterprise operations server 140 may be configured to provide server enterprise operations data to the edge enterprise operations device 302 that is representative of and/or associated with one or more server enabled enterprise operations actions of a server enabled workflow routine. In some embodiments, such as when the edge enterprise operations device 302 is physically located at the asset 102 and the enterprise operations server 140 is physically located at a remote location from the asset 102, the enterprise operations server 140 may be configured to provide server enterprise operations data to the edge enterprise operations device 302 via the network 130.

In some embodiments, the edge enterprise operations device 302 may be configured to receive server enterprise operations data. In some embodiments, the edge enterprise operations device 302 may be configured to receive the server enterprise operations data from the enterprise operations server 140. In some embodiments, such as when the edge enterprise operations device 302 is physically located at the asset 102 and the enterprise operations server 140 is physically located at a remote location from the asset 102, the edge enterprise operations device 302 may be configured to receive server enterprise operations data from the enterprise operations server 140 via the network 130. In some embodiments, the edge enterprise operations device 302 may be configured to receive the server enterprise operations data from the enterprise operations server 140 in real-time. Additionally, or alternatively, the edge enterprise operations device 302 may be configured to receive the server enterprise operations data from the enterprise operations server 140 periodically (e.g., the edge enterprise operations device 302 may be configured to receive the server enterprise operations data from the enterprise operations server 140 when the edge enterprise operations device is recoupled to the enterprise operations server 140 after being air gapped from the enterprise operations server 140 for a time period).

In some embodiments, the edge enterprise operations device 302 may be configured to initiate performance of one or more server enabled enterprise operations actions. In some embodiments, the edge enterprise operations device 302 may be configured to initiate performance of one or more server enabled enterprise operations actions based at least in part on server enterprise operations data. In some embodiments, the edge enterprise operations device 302 may be configured to initiate performance of one or more server enabled enterprise operations actions by providing server enterprise operations data to the one or more edge supported wearable devices 304A-304N. For example, the edge enterprise operations device 302 may be configured to provide server enterprise operations data to the one or more edge supported wearable devices 304A-304N that is representative of and/or associated with one or more server enabled enterprise operations actions of a server enabled workflow routine. In some embodiments, such as when the edge enterprise operations device 302 and/or the one or more edge supported wearable devices 304A-304N are physically located at the asset 102, the edge enterprise operations device 302 may be configured to provide server enterprise operations data to the one or more edge supported wearable devices 304A-304N via Wi-Fi, Bluetooth, and/or a physical connection (e.g., a wire).

In some embodiments, the edge enterprise operations device 302 may be configured to receive enterprise implementation data. In some embodiments, enterprise implementation data may be one or more items of data representative of and/or associated with one or more implemented enterprise operations actions (e.g., one or more implemented server enabled enterprise operations actions, edge enabled enterprise operations actions, and/or wearable enabled enterprise operations actions). Additionally, or alternatively, enterprise implementation data may be one or more items of data representative of and/or associated with one or more enterprise operations actions that have been attempted to be implemented but have not been implemented (e.g., one or more server enabled enterprise operations actions, edge enabled enterprise operations actions, and/or wearable enabled enterprise operations actions that have been attempt to be implemented but have not been implemented). Additionally, or alternatively, enterprise implementation data may be one or more items of data representative of and/or associated with information associated with one or more implemented enterprise operations actions, information associated with one or more enterprise operations actions that have been attempted to be implemented, and/or other information associated with one or more enterprise operations actions (e.g., information associated with one or more server enabled enterprise operations actions, edge enabled enterprise operations actions, and/or wearable enabled enterprise operations actions that have been implemented and/or have been attempted to be implemented).

In some embodiments, the edge enterprise operations device 302 may be configured to receive at least a portion of enterprise implementation data (e.g., a first portion of enterprise implementation data) from one or more of the one or more edge supported wearable devices 304A-304N. Said differently, of all of the enterprise implementation data received by the edge enterprise operations device 302, at least a portion of the received enterprise implementation data may be received from one or more of the one or more edge supported wearable devices 304A-304N. In this regard, for example, when the edge enterprise operations device 302 and/or the one or more edge supported wearable devices 304A-304N are physically located at the asset 102, the edge enterprise operations device 302 may be configured to receive a portion of enterprise implementation data from one or more of the one or more edge supported wearable devices 304A-304N via Wi-Fi, Bluetooth, and/or a physical connection (e.g., a wire).

In some embodiments, the edge enterprise operations device 302 may be configured to receive at least a portion of enterprise implementation data (e.g., a second portion of enterprise implementation data) from one or more of the one or more image capture devices 306A-306N. Said differently, of all of the enterprise implementation data received by the edge enterprise operations device 302, at least a portion of the received enterprise implementation data may be received from one or more of the one or more image capture devices 306A-306N. In this regard, for example, when the edge enterprise operations device 302 and/or the one or more image capture devices 306A-306N are physically located at the asset 102, the edge enterprise operations device 302 may be configured to receive a portion of enterprise implementation data from one or more of the one or more image capture devices 306A-306N via Wi-Fi, Bluetooth, and/or a physical connection (e.g., a wire).

In some embodiments, the edge enterprise operations device 302 may be configured to generate edge enterprise operations data. In some embodiments, the edge enterprise operations device 302 may be configured to generate edge enterprise operations data by applying the enterprise implementation data (e.g., enterprise implementation data captured by one or more of the one or more edge supported wearable devices 304A-304N and/or edge enterprise operations data captured by one or more of the one or more image capture devices 306A-306N) to a composite edge enterprise operations machine learning model 400.

In some embodiments, the composite edge enterprise operations machine learning model 400 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part generate edge enterprise operations data. The composite edge enterprise operations machine learning model 400 may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques. In some embodiments, the edge enterprise operations device 302 may comprise the composite edge enterprise operations machine learning model 400.

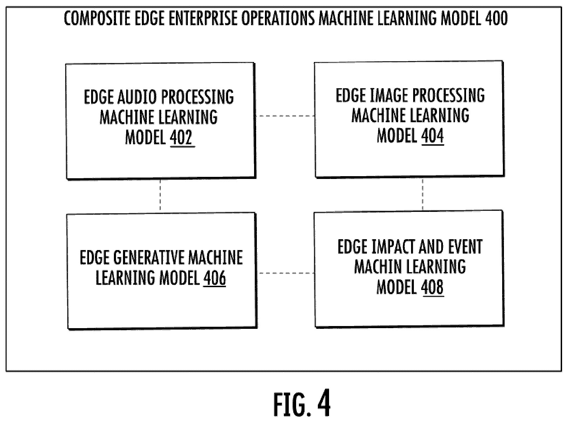

In some embodiments, such as illustrated in FIG. 4, the composite edge enterprise operations machine learning model 400 may comprise an edge audio processing machine learning model 402. In some embodiments, the edge audio processing machine learning model 402 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part generate edge enterprise operations data by, for example, performing machine learning based audio processing. The edge audio processing machine learning model 402 may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques.

In some embodiments, such as illustrated in FIG. 4, the composite edge enterprise operations machine learning model 400 may comprise an edge image processing machine learning model 404. In some embodiments, the edge image processing machine learning model 404 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part generate edge enterprise operations data by, for example, performing machine learning based image processing. The edge image processing machine learning model 404 may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques.

In some embodiments, such as illustrated in FIG. 4, the composite edge enterprise operations machine learning model 400 may comprise an edge generative machine learning model 406. In some embodiments, the edge generative machine learning model 406 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part generate edge enterprise operations data by, for example, performing machine learning based generative processing. For example, the edge generative machine learning model 406 may comprise a large language model. The edge generative machine learning model 406 may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques.

In some embodiments, such as illustrated in FIG. 4, the composite edge enterprise operations machine learning model 400 may comprise an edge impact and event machine learning model 408. In some embodiments, the edge impact and event machine learning model 408 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part generate edge enterprise operations data by, for example, performing machine learning based impact and event processing. The edge impact and event machine learning model 408 may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques.

Although FIG. 4 depicts the edge audio processing machine learning model 402, the edge image processing machine learning model 404, the edge impact and event machine learning model 408, and the edge impact and event machine learning model 408 as separate models of the composite edge enterprise operations machine learning model 400, it would be understood by one skilled in the field to which this disclosure pertains that one or more of the edge audio processing machine learning model 402, the edge image processing machine learning model 404, the edge impact and event machine learning model 408, and the edge impact and event machine learning model 408 could be combined into one or more models.

In some embodiments, the edge enterprise operations data may be one or more items of data representative of and/or associated with one or more edge enabled enterprise operations actions. In some embodiments, an edge enabled enterprise operations action may be one or more actions that may be performed by a user associated with the enterprise operations server 140, the edge enterprise operations device 302, the one or more edge supported wearable devices 304A-304N, and/or the asset 102 that is enabled at least in part by the edge enterprise operations device 302. For example, when the asset 102 is a warehouse, an edge enabled enterprise operations action may include picking an item from a location that has at least in part been enabled by the edge enterprise operations device 302 (e.g., the edge enterprise operations device 302 generated instructions for picking the item).

In some embodiments, an edge enabled workflow routine may include a plurality of edge enabled enterprise operations actions. In some embodiments, an edge enabled workflow routine may correspond to a task that may be performed by a user associated with the enterprise operations server 140, the edge enterprise operations device 302, the one or more edge supported wearable devices 304A-304N, and/or the asset 102 that is enabled at least in part by the edge enterprise operations device 302. Said differently, edge enabled enterprise operations actions may correspond to one or more steps or intermediate tasks that may be performed by a user associated with the enterprise operations server 140, the edge enterprise operations device 302, the one or more edge supported wearable devices 304A-304N, and/or the asset 102 to complete an edge enabled workflow routine.

In some embodiments, for example, an edge enabled workflow routine may include modifying a component in an engine (e.g., when the asset 102 is a maintenance shop) and is enabled at least in part by the edge enterprise operations device 302. In this regard, for example, an edge enabled enterprise operations action in an edge enabled workflow routine may include removing fasteners attached to the engine component to provide access to the engine component that is being modified. As another example, an edge enabled workflow routine may include packaging an item for transport (e.g., when the asset 102 is a distribution center) and is enabled at least in part by the edge enterprise operations device 302. In this regard, for example, an edge enabled enterprise operations action in the edge enabled workflow routine may include constructing a box for the item in which the item will be transferred. As another example, an edge enabled workflow routine may include performing a medical procedure (e.g., when the asset 102 is a healthcare center) and is enabled at least in part by the edge enterprise operations device 302. In this regard, for example, an edge enabled enterprise operations action in the edge enabled workflow routine may include identifying equipment needed for the medical procedure. As another example, an edge enabled workflow routine may include picking and transporting items (e.g., when the asset 102 is a warehouse) and is enabled at least in part by the edge enterprise operations device 302. In this regard, for example, an edge enabled enterprise operations action in the edge enabled workflow routine may include moving to a first location associated with a first item to be picked. As another example, an edge enabled workflow routine may include performing an industrial process (e.g., when the asset 102 is an industrial plant) and is enabled at least in part by the edge enterprise operations device 302. In this regard, for example, an edge enabled enterprise operations action in the edge enabled workflow routine may include combining raw ingredients used in the industrial process.

In some embodiments, the edge enterprise operations device 302 may be configured to generate edge enterprise operations data that is representative of instructions for performing one or more edge enabled enterprise operations actions. For example, the edge enterprise operations device 302 may be configured to generate edge enterprise operations data that is representative of instructions on how to tighten a screw (e.g., turn clockwise). In some embodiments, for example, generating edge enterprise operations data that is representative of instructions for performing one or more edge enabled enterprise operations actions may include the edge enterprise operations device 302 applying enterprise implementation data and/or server enterprise operations data to composite edge enterprise operations machine learning model 400. For example, generating edge enterprise operations data that is representative of instructions for performing one or more edge enabled enterprise operations actions may include the edge enterprise operations device 302 applying enterprise implementation data and/or server enterprise operations data to the edge audio processing machine learning model 402 and/or the edge generative machine learning model 406 of the composite edge enterprise operations machine learning model 400.

In some embodiments, the edge enterprise operations device 302 may be configured to generate edge enterprise operations data that is representative of a summary of one or more edge enabled enterprise operations actions performed by a user. For example, the edge enterprise operations device 302 may be configured to generate edge enterprise operations data that includes a summary of one or more edge enabled enterprise operations actions performed by a user (e.g., the enterprise implementation data includes voice notes from the user about the enterprise operations actions performed by the user and generating edge enterprise operations data includes creating a summary from the voice notes). In some embodiments, for example, generating edge enterprise operations data that is representative of a summary of one or more edge enabled enterprise operations actions performed by a user may include the edge enterprise operations device 302 applying enterprise implementation data and/or server enterprise operations data to the edge audio processing machine learning model 402 and/or the edge generative machine learning model 406 of the composite edge enterprise operations machine learning model 400.

In some embodiments, the edge enterprise operations device 302 may be configured to generate edge enterprise operations data that is representative of answers to one or more questions asked by a user performing of one or more edge enabled enterprise operations actions. For example, while performing an enterprise operations action, a user may generate enterprise implementation data that is representative of a question asked by the user for clarification on a particular enterprise operations action and the edge enterprise operations data may be representative of an answer to the user's question. In some embodiments, for example, generating edge enterprise operations data that is representative of answers to one or more questions asked by a user performing one or more edge enabled enterprise operations actions may include the edge enterprise operations device 302 applying enterprise implementation data and/or server enterprise operations data to the edge audio processing machine learning model 402 and/or the edge generative machine learning model 406 of the composite edge enterprise operations machine learning model 400.

In some embodiments, the edge enterprise operations device 302 may be configured to generate edge enterprise operations data that is representative of one or more insights related to performing one or more edge enabled enterprise operations actions. For example, the edge enterprise operations device 302 may be configured to generate an insight corresponding to the most efficient way to perform one or more edge enabled enterprise operations actions. In some embodiments, for example, generating edge enterprise operations data that is representative of one or more insights related to performing one or more edge enabled enterprise operations actions may include the edge enterprise operations device 302 applying enterprise implementation data and/or server enterprise operations data to the edge impact and event machine learning model 408 of the composite edge enterprise operations machine learning model 400.

In some embodiments, the edge enterprise operations device 302 may be configured to generate edge enterprise operations data that is representative of a motivation metric associated with a user performing one or more edge enabled enterprise operations actions. For example, a motivation metric may indicate whether a user is content (e.g., is understanding instructions associated with an edge enabled enterprise operations action and is completing enterprise operations actions in an orderly and timely manner) or frustrated (e.g., is not understanding instructions associated with an edge enabled enterprise operations action and is not completing enterprise operations actions in an orderly and timely manner). In some embodiments, for example, generating edge enterprise operations data that is representative of a motivation metric associated with a user performing one or more edge enabled enterprise operations actions may include the edge enterprise operations device 302 applying enterprise implementation data and/or server enterprise operations data to the edge impact and event machine learning model 408 of the composite edge enterprise operations machine learning model 400.

In some embodiments, the edge enterprise operations device 302 may be configured to generate edge enterprise operations data that is representative of an alert associated with the asset 102 associated with a user performing one or more edge enabled enterprise operations actions. For example, the edge enterprise operations device 302 may be configured to generate an alert that the asset 102 should be evacuated. In some embodiments, for example, generating edge enterprise operations data that is representative of an alert associated with the asset 102 associated with a user performing one or more edge enabled enterprise operations actions may include the edge enterprise operations device 302 applying enterprise implementation data and/or server enterprise operations data to the edge impact and event machine learning model 408 of the composite edge enterprise operations machine learning model 400.

In some embodiments, the edge enterprise operations device 302 may be configured to generate edge enterprise operations data that is representative of an assignment related to performing one or more edge enabled enterprise operations actions. For example, when enterprise operations actions being performed by a user include picking various items in a warehouse, the edge enterprise operations data may be representative of an indication that a user should move from one item to another item. In some embodiments, for example, generating edge enterprise operations data that is representative of an assignment related to performing one or more edge enabled enterprise operations actions may include the edge enterprise operations device 302 applying enterprise implementation data and/or server enterprise operations data to the edge impact and event machine learning model 408 of the composite edge enterprise operations machine learning model 400.

In some embodiments, the edge enterprise operations device 302 may be configured to generate edge enterprise operations data that is representative of a user performing one or more edge enabled enterprise operations actions. For example, the edge enterprise operations device 302 may be configured to generate edge enterprise operations data that is representative of a user unique identifier associated with a user. In this regard, for example, the edge enterprise operations device 302 may be configured to generate edge enterprise operations data based at least in part on a user unique identifier. For example, the edge enterprise operations device 302 may be configured to generate edge enterprise operations data that is representative of instructions for performing one or more edge enabled enterprise operations actions that is personalized for a particular user based at least in part on the user's user unique identifier. In some embodiments, for example, generating edge enterprise operations data that is representative of a user performing one or more edge enabled enterprise operations actions may include the edge enterprise operations device 302 applying enterprise implementation data and/or server enterprise operations data to the edge impact and event machine learning model 408 of the composite edge enterprise operations machine learning model 400.

In some embodiments, the edge enterprise operations device 302 may be configured to generate edge enterprise operations data that is representative of an indication that a battery associated with the one or more edge supported wearable devices 304A-304N is low. For example, the edge enterprise operations device 302 may be configured to generate edge enterprise operations data that includes an indication that a battery associated with the one or more edge supported wearable devices 304A-304N is low based at least in part on determining the number of enterprise operations actions that have been performed, the distance that one of the one or more edge supported wearable devices 304A-304N have traveled, and/or the amount of time since one of the one or more edge supported wearable devices 304A-304N has been charged. In some embodiments, for example, generating edge enterprise operations data that is representative of an indication that a battery associated with the one or more edge supported wearable devices 304A-304N is low may include the edge enterprise operations device 302 applying enterprise implementation data and/or server enterprise operations data to the edge impact and event machine learning model 408 of the composite edge enterprise operations machine learning model 400.

In some embodiments, the edge enterprise operations device 302 may be configured to generate edge enterprise operations data that is representative of an indication that a signal associated with the one or more edge supported wearable devices 304A-304N is low. For example, the edge enterprise operations device 302 may be configured to generate edge enterprise operations data that includes an indication that the signal is low based at least in part on a distance between the one or more edge supported wearable devices 304A-304N and the edge enterprise operations device 302. In some embodiments, for example, generating edge enterprise operations data that is representative of an indication that a signal associated with the one or more edge supported wearable devices 304A-304N is low may include the edge enterprise operations device 302 applying enterprise implementation data and/or server enterprise operations data to the edge impact and event machine learning model 408 of the composite edge enterprise operations machine learning model 400.

In some embodiments, the edge enterprise operations device 302 may be configured to generate edge enterprise operations data that is representative of one or more item tracking identifiers associated with an item interacted with by a user performing one or more edge enabled enterprise operations actions. For example, the edge enterprise operations device 302 may be configured to generate edge enterprise operations data that includes an item tracking identifier associated with a package a user prepared when performing one or more edge enabled enterprise operations actions. In some embodiments, for example, generating edge enterprise operations data that is representative of one or more item tracking identifiers associated with an item interacted with by a user performing one or more edge enabled enterprise operations actions may include the edge enterprise operations device 302 applying enterprise implementation data and/or server enterprise operations data to the edge impact and event machine learning model 408 of the composite edge enterprise operations machine learning model 400.

In some embodiments, the edge enterprise operations device 302 may be configured to generate edge enterprise operations data that is representative of a health metric associated with a user performing one or more edge enabled enterprise operations actions based at least in part on data representative of a user's voice. For example, a health metric may indicate a user's health, emotions, and/or mental state based at least in part on data representative of the user's voice. In some embodiments, for example, generating edge enterprise operations data that is representative of a health metric associated with a user performing one or more edge enabled enterprise operations actions based at least in part on data representative of a user's voice may include the edge enterprise operations device 302 applying enterprise implementation data and/or server enterprise operations data to the edge impact and event machine learning model 408 of the composite edge enterprise operations machine learning model 400.

In some embodiments, the edge enterprise operations device 302 may be configured to generate edge enterprise operations data that is representative of movement data associated with of one or more individuals within the asset 102. For example, movement data may include indications about the direction and speed of one or more individuals within the asset 102. In some embodiments, for example, generating edge enterprise operations data that is representative of movement data associated with of one or more individuals within the asset 102 may include the edge enterprise operations device 302 applying enterprise implementation data and/or server enterprise operations data to the edge image processing machine learning model 404 of the composite edge enterprise operations machine learning model 400.

In some embodiments, the edge enterprise operations device 302 may be configured to generate edge enterprise operations data that is representative of access data indicative of unauthorized access to the asset 102 by one or more individuals within the asset 102. In some embodiments, for example, generating edge enterprise operations data that is representative of access data indicative of unauthorized access to the asset 102 by one or more individuals within the asset 102 may include the edge enterprise operations device 302 applying enterprise implementation data and/or server enterprise operations data to the edge image processing machine learning model 404 of the composite edge enterprise operations machine learning model 400.

In some embodiments, the edge enterprise operations device 302 may be configured to generate edge enterprise operations data that is representative of object data indicative of one or more objects in the asset 102. For example, object data may be indicative of the condition of one or more objects in the asset 102 (e.g., whether a box is damaged and should be replaced). In some embodiments, for example, generating edge enterprise operations data that is representative of representative of object data indicative of one or more objects in the asset 102 may include the edge enterprise operations device 302 applying enterprise implementation data and/or server enterprise operations data to the edge image processing machine learning model 404 of the composite edge enterprise operations machine learning model 400.

In some embodiments, the edge enterprise operations device 302 may be configured to generate edge enterprise operations data that is representative of facial recognition data which identifies individuals in the asset 102 based at least in part on facial recognition techniques. In some embodiments, for example, generating edge enterprise operations data that is representative of facial recognition data which identifies individuals in the asset 102 based at least in part on facial recognition techniques may include the edge enterprise operations device 302 applying enterprise implementation data and/or server enterprise operations data to the edge image processing machine learning model 404 of the composite edge enterprise operations machine learning model 400.

In some embodiments, the edge enterprise operations device 302 may be configured to generate edge enterprise operations data that is representative of individual count data which identifies the number of individuals within the asset 102. In some embodiments, for example, generating edge enterprise operations data that is representative of individual count data which identifies the number of individuals within the asset 102 may include the edge enterprise operations device 302 applying enterprise implementation data and/or server enterprise operations data to the edge image processing machine learning model 404 of the composite edge enterprise operations machine learning model 400.

In some embodiments, the edge enterprise operations device 302 may be configured to generate edge enterprise operations data that is representative of one or more reports. For example, the one or more reports may include information on enterprise operations actions that have been performed. In some embodiments, for example, generating edge enterprise operations data that is representative of one or more reports may include the edge enterprise operations device 302 applying enterprise implementation data and/or server enterprise operations data to the edge generative machine learning model 406 of the composite edge enterprise operations machine learning model 400.

In some embodiments, the edge enterprise operations device 302 may be configured to generate edge enterprise operations data that is representative data queried from the enterprise operations server 140 and/or one or more external resources. In some embodiments, for example, generating edge enterprise operations data that is representative data queried from the enterprise operations server 140 and/or one or more external resources may include the edge enterprise operations device 302 applying enterprise implementation data and/or server enterprise operations data to the edge generative machine learning model 406 of the composite edge enterprise operations machine learning model 400.

In some embodiments, the edge enterprise operations device 302 may be configured to generate edge enterprise operations data that is representative of one or more future trends associated with the asset 102 or one or more enterprise operations actions. In some embodiments, for example, generating edge enterprise operations data that is representative of one or more future trends associated with the asset 102 or one or more enterprise operations actions may include the edge enterprise operations device 302 applying enterprise implementation data and/or server enterprise operations data to the edge impact and event machine learning model 408 of the composite edge enterprise operations machine learning model 400.

In some embodiments, the edge enterprise operations device 302 may be configured to generate edge enterprise operations data that is representative of one or more future reminders associated with one or more future enterprise operations actions. In some embodiments, for example, generating edge enterprise operations data that is representative of one or more future reminders associated with one or more future enterprise operations actions may include the edge enterprise operations device 302 applying enterprise implementation data and/or server enterprise operations data to the edge impact and event machine learning model 408 of the composite edge enterprise operations machine learning model 400.

In some embodiments, generating edge enterprise operations data may include the edge enterprise operations device 302 being configured to transform enterprise implementation data that is representative of an internal vocalization of a user into natural language text and/or natural language audio representative of a user's intended meaning of the internal vocalization. For example, the edge enterprise operations device 302 may be configured to transform enterprise implementation data representative of a grunt by a user into natural language text and/or natural language audio representative of the user's intended meaning of the internal vocalization (e.g., yes). Said differently, for example, by applying the enterprise implementation data and/or the server enterprise operations data to the edge audio processing machine learning model 402 and/or the edge generative machine learning model 406 of the composite edge enterprise operations machine learning model 400, the edge enterprise operations device 302 may be configured to transform enterprise implementation data that is representative of an internal vocalization of a user into natural language text and/or natural language audio representative of a user's intended meaning of the internal vocalization.

In some embodiments, generating edge enterprise operations data may include the edge enterprise operations device 302 being configured to transform enterprise implementation data that is representative of a metaphor provided a user into natural language text and/or natural language audio representative of a user's intended meaning of the metaphor. Said differently, for example, by applying the enterprise implementation data and/or the server enterprise operations data to the edge audio processing machine learning model 402 and/or the edge generative machine learning model 406 of the composite edge enterprise operations machine learning model 400, the edge enterprise operations device 302 may be configured to transform enterprise implementation data that is representative of a metaphor provided by a user into natural language text and/or natural language audio representative of a user's intended meaning of the metaphor.

In some embodiments, generating edge enterprise operations data may include the edge enterprise operations device 302 being configured to transform enterprise implementation data that is representative of a non-verbal cue provided by a user into natural language text and/or natural language audio representative of a user's intended meaning of the non-verbal cue. For example, the edge enterprise operations device 302 may be configured to transform enterprise implementation data representative of a sigh, cough, whisper, and/or the like by a user into natural language text and/or natural language audio representative of the user's intended meaning of the non-verbal cue. Said differently, for example, by applying the enterprise implementation data and/or the server enterprise operations data to the edge audio processing machine learning model 402 and/or the edge generative machine learning model 406 of the composite edge enterprise operations machine learning model 400, the edge enterprise operations device 302 may be configured to transform enterprise implementation data that is representative of a non-verbal cue provided by a user into natural language text and/or natural language audio representative of a user's intended meaning of the non-verbal cue.

In some embodiments, generating edge enterprise operations data may include the edge enterprise operations device 302 being configured to transform enterprise implementation data that includes data representative of a user's voice into data representative of an anonymized version of the user's voice (e.g., such that a user cannot be identified from the enterprise implementation data based at least in part on the user's voice). Said differently, for example, by applying the enterprise implementation data and/or the server enterprise operations data to the edge audio processing machine learning model 402 and/or the edge generative machine learning model 406 of the composite edge enterprise operations machine learning model 400, the edge enterprise operations device 302 may be configured to transform enterprise implementation data that includes data representative of a user's voice into data representative of an anonymized version of the user's voice.

In some embodiments, generating edge enterprise operations data may include the edge enterprise operations device 302 being configured to transform enterprise implementation data that includes data representative of information provided by a user in a first language into data representative of information provided by the user in a second language. For example, the edge enterprise operations device 302 may be configured to transform data representative of information provided by a user in Spanish into data representative of information provided by the user in English. Said differently, for example, by applying the enterprise implementation data and/or the server enterprise operations data to the edge audio processing machine learning model 402 and/or the edge generative machine learning model 406 of the composite edge enterprise operations machine learning model 400, the edge enterprise operations device 302 may be configured to transform enterprise implementation data that includes data representative of information provided by a user in a first language into data representative of information provided by the user in a second language.

In some embodiments, generating edge enterprise operations data may include the edge enterprise operations device 302 being configured to transform enterprise implementation data that includes data representative of information provided by a user into data representative of information provided by the user and a policy associated with the information provided by the user (e.g., the edge enterprise operations device 302 is configured supplement information provided by a user with information about a policy associated with the information provided by the user). Said differently, for example, by applying the enterprise implementation data and/or the server enterprise operations data to the edge audio processing machine learning model 402 and/or the edge generative machine learning model 406 of the composite edge enterprise operations machine learning model 400, the edge enterprise operations device 302 may be configured to transform enterprise implementation data that includes data representative of information provided by a user into data representative of information provided by the user and a policy associated with the information provided by the user.

In some embodiments, the edge enterprise operations device 302 may be configured to initiate performance of one or more edge enabled enterprise operations actions. In some embodiments, the edge enterprise operations device 302 may be configured to initiate performance of one or more edge enabled enterprise operations actions based at least in part on edge enterprise operations data. In some embodiments, the edge enterprise operations device 302 may be configured to initiate performance of one or more edge enabled enterprise operations actions by providing edge enterprise operations data to one or more of the one or more edge supported wearable devices 304A-304N. For example, the edge enterprise operations device 302 may be configured to provide edge enterprise operations data to one or more of the one or more edge supported wearable devices 304A-304N that is representative of and/or associated with one or more edge enabled enterprise operations actions of an edge enterprise workflow routine. In some embodiments, such as when the edge enterprise operations device 302 is physically located at the asset 102 and the one or more edge supported wearable devices 304A-304N are physically located at the asset 102, the edge enterprise operations device 302 may be configured to provide edge enterprise operations data to the edge enterprise operations device 302 via Wi-Fi, Bluetooth, and/or a physical connection (e.g., a wire).

In some embodiments, the one or more edge supported wearable devices 304A-304N may be configured to generate enterprise implementation data. For example, the one or more edge supported wearable devices 304A-304N may be configured to generate at least a portion of the enterprise implementation data received by the edge enterprise operations device 302.

In some embodiments, generating enterprise implementation data may include the one or more edge supported wearable devices 304A-304N being configured to capture enterprise implementation data. In this regard, for example, the one or more edge supported wearable devices 304A-304N may include one or more sensors configured to capture enterprise implementation data. For example, the one or more edge supported wearable devices 304A-304N may include one or more audio sensors, telemetry sensors, image sensors, location sensors, worker characteristic sensors, environmental state sensors, electromagnetic energy sensors, force detection sensors (e.g., accelerometers, vibration sensors, visual sensors, and/or the like configured to capture enterprise implementation data.

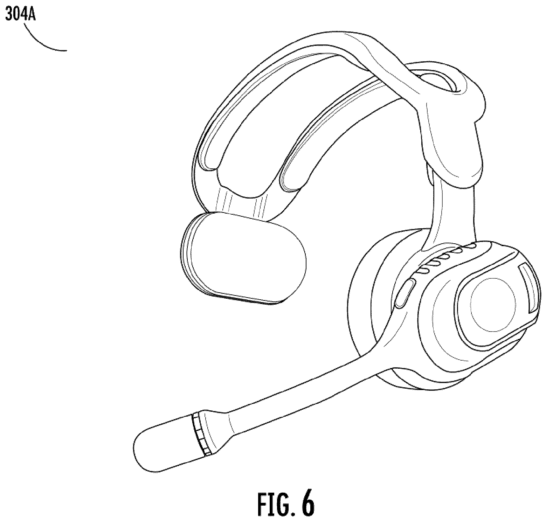

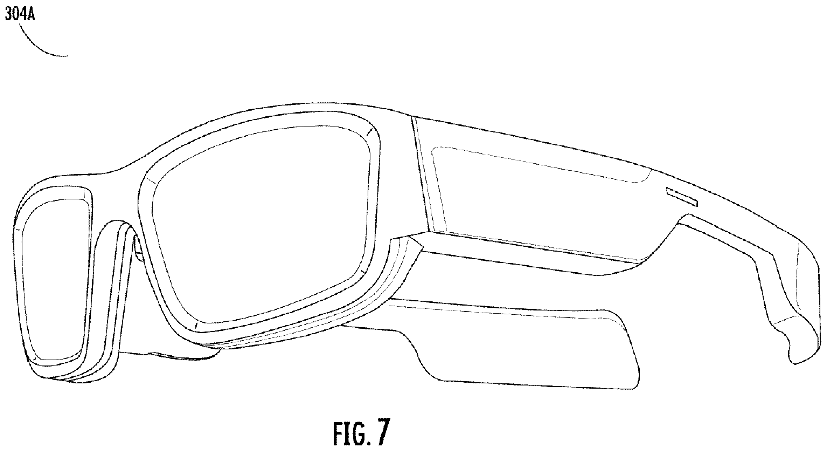

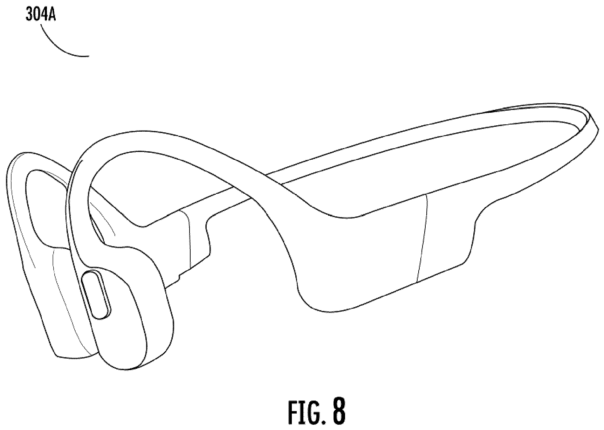

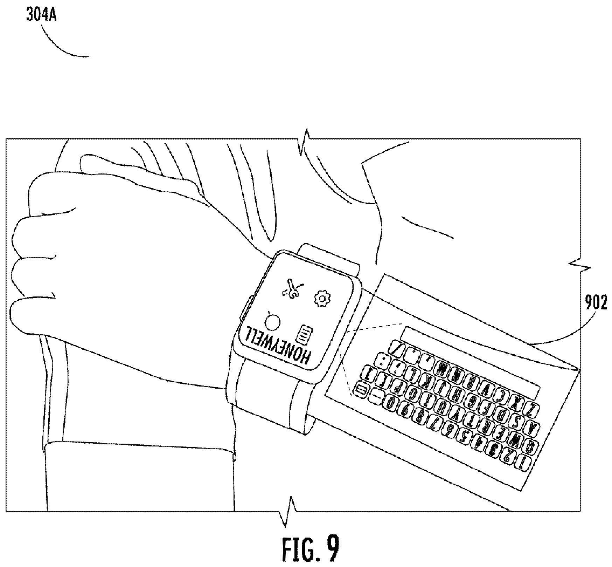

In some embodiments, at least one of the one or more edge supported wearable devices 304A-304N may be a headset. For example, at least one of the one or more edge supported wearable devices 304A-304N may be a headset such as the headset illustrated in FIG. 6. In some embodiments, at least one of the one or more edge supported wearable devices 304A-304N may be a pair of smart glasses. For example, at least one of the one or more edge supported wearable devices 304A-304N may be a pair of smart glasses such as the pair of smart glasses illustrated in FIG. 7. In some embodiments, at least one of the one or more edge supported wearable devices 304A-304N may be a headphone apparatus. For example, at least one of the one or more edge supported wearable devices 304A-304N may be a headphone apparatus such as the headphone apparatus illustrated in FIG. 8. In some embodiments, at least one of the one or more edge supported wearable devices 304A-304N may be a smart watch. For example, at least one of the one or more edge supported wearable devices 304A-304N may be a smart watch such as the smart watch illustrated in FIG. 8. In some embodiments, such as illustrated in FIG. 9, the one or more edge supported wearable devices 304A-304N may be configured to generate and provide a projected display 902.

In some embodiments, generating enterprise implementation data may include processing the enterprise implementation data using a wearable device machine learning model 500 (e.g., processing the captured enterprise implementation data using the wearable device machine learning model 500). In some embodiments, the wearable device machine learning model 500 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part process enterprise implementation data and/or generate wearable enterprise operations data . The wearable device machine learning model 500 may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques. In some embodiments, the wearable device machine learning model 500 may comprise a large language model. In some embodiments, one or more of the edge supported wearable devices 304A-304N may comprise the wearable device machine learning model 500 (e.g., each edge supported wearable devices 304A-304N its own wearable device machine learning model 500)

In some embodiments, the one or more edge supported wearable devices 304A-304N may be configured to generate wearable enterprise operations data. In some embodiments, the one or more edge supported wearable devices 304A-304N may be configured to generate wearable enterprise operations data by applying the enterprise implementation data (e.g., enterprise implementation data captured by one or more of the one or more edge supported wearable devices 304A-304N) to the wearable device machine learning model 500.

In some embodiments, the wearable enterprise operations data may be one or more items of data representative of and/or associated with one or more wearable enabled enterprise operations actions. In some embodiments, a wearable enabled enterprise operations action may be one or more actions that may be performed by a user associated with the enterprise operations server 140, the edge enterprise operations device 302, the one or more edge supported wearable devices 304A-304N, and/or the asset 102 that is enabled at least in part by one or more of the one or more edge supported wearable devices 304A-304N.

In some embodiments, a wearable enabled workflow routine may include a plurality of wearable enabled enterprise operations actions. In some embodiments, a wearable enabled workflow routine may correspond to a task that may be performed by a user associated with the enterprise operations server 140, the edge enterprise operations device 302, the one or more edge supported wearable devices 304A-304N, and/or the asset 102 that is enabled at least in part by one or more of the one or more edge supported wearable devices 304A-304N. Said differently, wearable enabled enterprise operations actions may correspond to one or more steps or intermediate tasks that may be performed by a user associated with the enterprise operations server 140, the edge enterprise operations device 302, the one or more edge supported wearable devices 304A-304N, and/or the asset 102 to complete a wearable enabled workflow routine.

In some embodiments, for example, a wearable enabled workflow routine may include modifying a component in an engine (e.g., when the asset 102 is a maintenance shop) and is enabled at least in part by one or more of the one or more edge supported wearable devices 304A-304N. In this regard, for example, a wearable enabled enterprise operations action in a wearable enabled workflow routine may include removing fasteners attached to the engine component to provide access to the engine component that is being modified. As another example, a wearable enabled workflow routine may include packaging an item for transport (e.g., when the asset 102 is a distribution center) and is enabled at least in part by one or more of the one or more edge supported wearable devices 304A-304N. In this regard, for example, a wearable enabled enterprise operations action in the wearable enabled workflow routine may include constructing a box for the item in which the item will be transferred. As another example, a wearable enabled workflow routine may include performing a medical procedure (e.g., when the asset 102 is a healthcare center) and is enabled at least in part by one or more of the one or more edge supported wearable devices 304A-304N. In this regard, for example, a wearable enabled enterprise operations action in the wearable enabled workflow routine may include identifying equipment needed for the medical procedure. As another example, a wearable enabled workflow routine may include picking and transporting items (e.g., when the asset 102 is a warehouse) and is enabled at least in part by one or more of the one or more edge supported wearable devices 304A-304N. In this regard, for example, a wearable enabled enterprise operations action in the wearable enabled workflow routine may include moving to a first location associated with a first item to be picked. As another example, a wearable enabled workflow routine may include performing an industrial process (e.g., when the asset 102 is an industrial plant) and is enabled at least in part by one or more of the one or more edge supported wearable devices 304A-304N. In this regard, for example, a wearable enabled enterprise operations action in the wearable enabled workflow routine may include combining raw ingredients used in the industrial process.

In some embodiments, the one or more edge supported wearable devices 304A-304N may be configured to generate wearable enterprise operations data that is representative of instructions for performing one or more wearable enabled enterprise operations actions. For example, the one or more edge supported wearable devices 304A-304N may be configured to generate wearable enterprise operations data that is representative of instructions on how to tighten a screw (e.g., turn clockwise). In some embodiments, for example, generating wearable enterprise operations data that is representative of instructions for performing one or more wearable enabled enterprise operations actions may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of a user performing one or more wearable enabled enterprise operations actions. For example, the one or more edge supported wearable devices 304A-304N may be configured to generate wearable enterprise operations data that is representative of a user unique identifier associated with a user. In this regard, for example, the one or more edge supported wearable devices 304A-304N may be configured to generate wearable enterprise operations data based at least in part on a user unique identifier. For example, the one or more edge supported wearable devices 304A-304N may be configured to generate wearable enterprise operations data that is representative of instructions for performing one or more wearable enabled enterprise operations actions that is personalized for a particular user based at least in part on the user's user unique identifier. In some embodiments, for example, generating wearable enterprise operations data that is representative of a user performing one or more wearable enabled enterprise operations actions may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of one or more insights related to performing one or more wearable enabled enterprise operations actions. For example, the one or more edge supported wearable devices 304A-304N may be configured to generate an insight corresponding to the most efficient way to perform one or more wearable enabled enterprise operations actions. In some embodiments, for example, generating wearable enterprise operations data that is representative of one or more insights related to performing one or more wearable enabled enterprise operations actions may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of a motivation metric associated with a user performing one or more wearable enabled enterprise operations actions. For example, a motivation metric may indicate whether a user is content (e.g., is understanding instructions provided by the one or more edge supported wearable devices 304A-304N and is completing enterprise operations actions in an orderly and timely manner) or frustrated (e.g., is not understanding instructions provided by the one or more edge supported wearable devices 304A-304N and is not completing enterprise operations actions in an orderly and timely manner). In some embodiments, for example, generating wearable enterprise operations data that is r representative of a motivation metric associated with a user performing one or more wearable enabled enterprise operations actions may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of an alert associated with the asset 102 associated with a user performing one or more wearable enabled enterprise operations actions. For example, the one or more edge supported wearable devices 304A-304N may be configured to generate an alert that the asset 102 should be evacuated. In some embodiments, for example, generating wearable enterprise operations data that is representative of an alert associated with the asset 102 associated with a user performing one or more wearable enabled enterprise operations actions may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of an assignment related to performing one or more wearable enabled enterprise operations actions. For example, when enterprise operations actions being performed by a user include picking various items in a warehouse, the wearable enterprise operations data may be representative of an indication that a user should move from one item to another item. In some embodiments, for example, generating wearable enterprise operations data that is representative of an assignment related to performing one or more wearable enabled enterprise operations actions may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of answers to one or more questions asked by a user performing one or more wearable enabled enterprise operations actions. For example, while performing an enterprise operations action, a user may query the one or more edge supported wearable devices 304A-304N to ask for clarification on a particular enterprise operations action and the wearable enterprise operations data may be representative of an answer to the user's question. In some embodiments, for example, generating wearable enterprise operations data that is representative of answers to one or more questions asked by a user performing one or more wearable enabled enterprise operations actions may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of a summary of one or more wearable enabled enterprise operations actions performed by a user. For example, the one or more edge supported wearable devices 304A-304N may be configured to generate wearable enterprise operations data that includes a summary of one or more wearable enabled enterprise operations actions performed by a user (e.g., the enterprise implementation data includes voice notes from the user about the enterprise operations actions performed by the user and generating wearable enterprise operations data includes creating a summary from the voice notes). In some embodiments, for example, generating wearable enterprise operations data that is representative of a summary of one or more wearable enabled enterprise operations actions performed by a user may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of an indication that a battery associated with the one or more edge supported wearable devices 304A-304N is low. For example, the one or more edge supported wearable devices 304A-304N may be configured to generate wearable enterprise operations data that includes an indication that a battery associated with the one or more edge supported wearable devices 304A-304N is low based at least in part on determining the number of enterprise operations actions that have been performed, the distance that one of the one or more edge supported wearable devices 304A-304N have traveled, and/or the amount of time since one of the one or more edge supported wearable devices 304A-304N has been charged. In some embodiments, for example, generating wearable enterprise operations data that is representative of an indication that a battery associated with the one or more edge supported wearable devices 304A-304N is low may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of an indication that a signal associated with the one or more edge supported wearable devices 304A-304N is low. For example, the one or more edge supported wearable devices 304A-304N may be configured to generate wearable enterprise operations data that includes an indication that the signal is low based at least in part on a distance between the one or more edge supported wearable devices 304A-304N and the edge enterprise operations device 302. In some embodiments, for example, generating wearable enterprise operations data that is representative of an indication that a signal associated with the one or more edge supported wearable devices is low may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of one or more item tracking identifiers associated with an item interacted with by a user performing one or more wearable enabled enterprise operations actions. For example, the one or more edge supported wearable devices 304A-304N may be configured to generate wearable enterprise operations data that includes an item tracking identifier associated with a package a user prepared when performing one or more wearable enabled enterprise operations actions. In some embodiments, for example, generating wearable enterprise operations data that is representative of one or more item tracking identifiers associated with an item interacted with by a user performing one or more wearable enabled enterprise operations actions may include the one or more edge supported wearable devices 304A-304N applying enterprise implementation data to the wearable device machine learning model 500.

In some embodiments, the one or more edge supported wearable devices 304A-304N may be configured to generate wearable enterprise operations data that is representative of a health metric associated with a user performing one or more wearable enabled enterprise operations actions based at least in part on data representative of a user's voice. For example, a health metric may indicate a user's health, emotions, and/or mental state based at least in part on data representative of the user's voice. In some embodiments, for example, generating wearable enterprise operations data that is representative of a health metric associated with a user performing one or more wearable enabled enterprise operations actions based at least in part on data representative of a user's voice may include the one or more edge supported wearable devices 304A-304N applying enterprise implementation data to the wearable device machine learning model 500.

In some embodiments, generating wearable enterprise operations data may include the one or more edge supported wearable devices 304A-304N being configured to transform enterprise implementation data that is representative of an internal vocalization of a user into natural language text and/or natural language audio representative of a user's intended meaning of the internal vocalization. For example, the one or more edge supported wearable devices 304A-304N may be configured to transform enterprise implementation data representative of a grunt by a user into natural language text and/or natural language audio representative of the user's intended meaning of the internal vocalization (e.g., yes). Said differently, for example, by applying the enterprise implementation data (e.g., enterprise implementation data captured by one or more of the one or more edge supported wearable devices 304A-304N) to the wearable device machine learning model 500 (e.g., when the wearable device machine learning model 500 includes a large language model), the one or more edge supported wearable devices 304A-304N may be configured to transform enterprise implementation data that is representative of an internal vocalization of a user into natural language text and/or natural language audio representative of a user's intended meaning of the internal vocalization.

In some embodiments, generating wearable enterprise operations data may include the one or more edge supported wearable devices 304A-304N being configured to transform enterprise implementation data that is representative of a metaphor provided a user into natural language text and/or natural language audio representative of a user's intended meaning of the metaphor. Said differently, for example, by applying the enterprise implementation data (e.g., enterprise implementation data captured by one or more of the one or more edge supported wearable devices 304A-304N) to the wearable device machine learning model 500 (e.g., when the wearable device machine learning model 500 includes a large language model), the one or more edge supported wearable devices 304A-304N may be configured to transform enterprise implementation data that is representative of a metaphor provided by a user into natural language text and/or natural language audio representative of a user's intended meaning of the metaphor.

In some embodiments, generating wearable enterprise operations data may include the one or more edge supported wearable devices 304A-304N being configured to transform enterprise implementation data that is representative of a non-verbal cue provided by a user into natural language text and/or natural language audio representative of a user's intended meaning of the non-verbal cue. For example, the one or more edge supported wearable devices 304A-304N may be configured to transform enterprise implementation data representative of a sigh, cough, whisper, and/or the like by a user into natural language text and/or natural language audio representative of the user's intended meaning of the non-verbal cue. Said differently, for example, by applying the enterprise implementation data (e.g., enterprise implementation data captured by one or more of the one or more edge supported wearable devices 304A-304N) to the wearable device machine learning model 500 (e.g., when the wearable device machine learning model 500 includes a large language model), the one or more edge supported wearable devices 304A-304N may be configured to transform enterprise implementation data that is representative of a non-verbal cue provided by a user into natural language text and/or natural language audio representative of a user's intended meaning of the non-verbal cue.

In some embodiments, generating wearable enterprise operations data may include the one or more edge supported wearable devices 304A-304N being configured to transform enterprise implementation data that includes data representative of a user's voice into data representative of an anonymized version of the user's voice (e.g., such that a user cannot be identified from the enterprise implementation data based at least in part on the user's voice). Said differently, for example, by applying the enterprise implementation data (e.g., enterprise implementation data captured by one or more of the one or more edge supported wearable devices 304A-304N) to the wearable device machine learning model 500 (e.g., when the wearable device machine learning model 500 includes a large language model), the one or more edge supported wearable devices 304A-304N may be configured to transform enterprise implementation data that includes data representative of a user's voice into data representative of an anonymized version of the user's voice.

In some embodiments, generating wearable enterprise operations data may include the one or more edge supported wearable devices 304A-304N being configured to transform enterprise implementation data that includes data representative of information provided by a user in a first language into data representative of information provided by the user in a second language. For example, the one or more edge supported wearable devices 304A-304N may be configured to transform data representative of information provided by a user in Spanish into data representative of information provided by the user in English. Said differently, for example, by applying the enterprise implementation data (e.g., enterprise implementation data captured by one or more of the one or more edge supported wearable devices 304A-304N) to the wearable device machine learning model 500 (e.g., when the wearable device machine learning model 500 includes a large language model), the one or more edge supported wearable devices 304A-304N may be configured to transform enterprise implementation data that includes data representative of information provided by a user in a first language into data representative of information provided by the user in a second language.

In some embodiments, generating wearable enterprise operations data may include the one or more edge supported wearable devices 304A-304N being configured to transform enterprise implementation data that includes data representative of information provided by a user into data representative of information provided by the user and a policy associated with the information provided by the user (e.g., the one or more edge supported wearable devices 304A-304N are configured supplement information provided by a user with information about a policy associated with the information provided by the user). Said differently, for example, by applying the enterprise implementation data (e.g., enterprise implementation data captured by one or more of the one or more edge supported wearable devices 304A-304N) to the wearable device machine learning model 500 (e.g., when the wearable device machine learning model 500 includes a large language model), the one or more edge supported wearable devices 304A-304N may be configured to transform enterprise implementation data that includes data representative of information provided by a user into data representative of information provided by the user and a policy associated with the information provided by the user.

In some embodiments, the one or more edge supported wearable devices 304A-304N may be configured to initiate performance of one or more wearable enabled enterprise operations actions. In some embodiments, the one or more edge supported wearable devices 304A-304N may be configured to initiate performance of one or more wearable enabled enterprise operations actions based at least in part on wearable enterprise operations data. In some embodiments, the one or more edge supported wearable devices 304A-304N may be configured to initiate performance of one or more wearable enabled enterprise operations actions by providing wearable enterprise operations data to a user. For example, the one or more edge supported wearable devices 304A-304N may be configured to initiate performance of one or more wearable enabled enterprise operations actions by providing wearable enterprise operations data to a user that is representative of instructions for performing one or more wearable enabled enterprise operations actions (e.g., wearable enterprise operations data that is representative of instructions on how to tighten a screw (e.g., turn clockwise)).

In some embodiments, the one or more edge supported wearable devices 304A-304N may be configured to initiate performance of one or more wearable enabled enterprise operations actions by providing wearable enterprise operations data to a user via one or more text outputs (e.g., via a user interface of the one or more edge supported wearable devices 304A-304N) and/or audio outputs (e.g., via a microphone of the one or more edge supported wearable devices 304A-304N). In some embodiments, the one or more text outputs and/or audio outputs may be associated with an emotion enhancement. In this regard, the one or more text outputs and/or audio outputs may be associated with an emotion enhancement that includes the one or more text outputs and/or audio outputs having a particular tone or inflection (e.g., to motivate a user that the one or more edge supported wearable devices 304A-304N has determined needs to be motivated). In some embodiments, the one the one or more text outputs and/or audio outputs may be associated with a coded vocalization. In this regard, for example, one or more text outputs and/or audio outputs may be associated with a coded vocalization that includes the one or more text outputs and/or audio outputs including whistling in a specific pattern and/or rhythm. In some embodiments, the one or more text outputs and/or audio outputs may be associated with a vocal improvisation. In this regard, the one or more text outputs and/or audio outputs may be associated with a vocal improvisation that includes the one or more text outputs and/or audio outputs having one or more filler words, such as um and/or uh. In some embodiments, the one or more text outputs and/or audio outputs may be associated with a particular accent. In this regard, the one or more text outputs and/or audio outputs may be associated with a particular accent that includes the one or more text outputs and/or audio outputs having a particular accent that a user is familiar with.

In some embodiments, the one or more edge supported wearable devices 304A-304N may be configured to initiate performance of one or more wearable enabled enterprise operations actions by causing a battery associated with one or more edge supported wearable devices 304A-304N to be charged. For example, the one or more edge supported wearable devices 304A-304N may be configured to initiate performance of one or more wearable enabled enterprise operations actions by causing a battery associated with one or more edge supported wearable devices 304A-304N to be charged when wearable enterprise operations data is representative of an indication that a battery associated with the one or more edge supported wearable devices 304A-304N is low.

In some embodiments, the one or more edge supported wearable devices 304A-304N may be configured to initiate performance of one or more wearable enabled enterprise operations actions by causing a signal associated with one or more edge supported wearable devices 304A-304N to be boosted. For example, the one or more edge supported wearable devices 304A-304N may be configured to initiate performance of one or more wearable enabled enterprise operations actions by causing a signal associated with one or more edge supported wearable devices 304A-304N to be boosted when wearable enterprise operations data is representative of an indication that a signal associated with the one or more edge supported wearable devices 304A-304N is low.

In some embodiments, one or more of the one or more edge supported wearable devices 304A-304N may be configured to receive server enterprise operations data. In some embodiments, one or more of the one or more edge supported wearable devices 304A-304N may be configured to receive server enterprise operations data from the enterprise operations server 140. In some embodiments, such as when one or more of the one or more edge supported wearable devices 304A-304N is physically located at the asset 102 and the enterprise operations server 140 is physically located at a remote location from the asset 102, the one or more of the one or more edge supported wearable devices 304A-304N may be configured to receive server enterprise operations data from the enterprise operations server 140 via the network 130.

In some embodiments, one or more of the one or more edge supported wearable devices 304A-304N may be configured to receive server enterprise operations data from the edge enterprise operations device 302. In some embodiments, such as when one or more of the one or more edge supported wearable devices 304A-304N is physically located at the asset 102 and the edge enterprise operations device 302 is physically located at the asset 102, the one or more of the one or more edge supported wearable devices 304A-304N may be configured to receive server enterprise operations data from the edge enterprise operations device 302 via Wi-Fi, Bluetooth, and/or a physical connection (e.g., a wire).

In some embodiments, one or more of the one or more edge supported wearable devices 304A-304N may be configured to initiate performance of one or more server enabled enterprise operations actions. In some embodiments, one or more of the one or more edge supported wearable devices 304A-304N may be configured to initiate performance of one or more server enabled enterprise operations actions based at least in part on server enterprise operations data. In some embodiments, one or more of the one or more edge supported wearable devices 304A-304N may be configured to initiate performance of one or more server enabled enterprise operations actions by providing server enterprise operations data to a user. For example, the one or more edge supported wearable devices 304A-304N may be configured to initiate performance of one or more server enabled enterprise operations actions by providing server enterprise operations data to a user that is representative of instructions for performing one or more server enabled enterprise operations actions (e.g., server enterprise operations data that is representative of instructions on how to tighten a screw (e.g., turn clockwise)).

In some embodiments, the one or more edge supported wearable devices 304A-304N may be configured to initiate performance of one or more server enabled enterprise operations actions by providing server enterprise operations data to a user via one or more text outputs (e.g., via a user interface of the one or more edge supported wearable devices 304A-304N) and/or audio outputs (e.g., via a microphone of the one or more edge supported wearable devices 304A-304N). In some embodiments, the one or more text outputs and/or audio outputs may be associated with an emotion enhancement. In this regard, the one or more text outputs and/or audio outputs may be associated with an emotion enhancement that includes the one or more text outputs and/or audio outputs having a particular tone or inflection (e.g., to motivate a user that needs to be motivated). In some embodiments, the one the one or more text outputs and/or audio outputs may be associated with a coded vocalization. In this regard, for example, one or more text outputs and/or audio outputs may be associated with a coded vocalization that includes the one or more text outputs and/or audio outputs including whistling in a specific pattern and/or rhythm. In some embodiments, the one or more text outputs and/or audio outputs may be associated with a vocal improvisation. In this regard, the one or more text outputs and/or audio outputs may be associated with a vocal improvisation that includes the one or more text outputs and/or audio outputs having one or more filler words, such as um and/or uh. In some embodiments, the one or more text outputs and/or audio outputs may be associated with a particular accent. In this regard, the one or more text outputs and/or audio outputs may be associated with a particular accent that includes the one or more text outputs and/or audio outputs having a particular accent that a user is familiar with.

In some embodiments, one or more of the one or more edge supported wearable devices 304A-304N may be configured to receive edge enterprise operations data. In some embodiments, one or more of the one or more edge supported wearable devices 304A-304N may be configured to receive edge enterprise operations data from the edge enterprise operations device 302. In some embodiments, such as when one or more of the one or more edge supported wearable devices 304A-304N is physically located at the asset 102 and the edge enterprise operations device 302 is physically located at the asset 102, the one or more of the one or more edge supported wearable devices 304A-304N may be configured to receive edge enterprise operations data from the edge enterprise operations device 302 via Wi-Fi, Bluetooth, and/or a physical connection (e.g., a wire).

In some embodiments, one or more of the one or more edge supported wearable devices 304A-304N may be configured to initiate performance of one or more edge enabled enterprise operations actions. In some embodiments, one or more of the one or more edge supported wearable devices 304A-304N may be configured to initiate performance of one or more edge enabled enterprise operations actions based at least in part on edge enterprise operations data. In some embodiments, one or more of the one or more edge supported wearable devices 304A-304N may be configured to initiate performance of one or more edge enabled enterprise operations actions by providing edge enterprise operations data to a user. For example, the one or more edge supported wearable devices 304A-304N may be configured to initiate performance of one or more edge enabled enterprise operations actions by providing edge enterprise operations data to a user that is representative of instructions for performing one or more edge enabled enterprise operations actions (e.g., edge enterprise operations data that is representative of instructions on how to tighten a screw (e.g., turn clockwise)).

In some embodiments, the one or more edge supported wearable devices 304A-304N may be configured to initiate performance of one or more edge enabled enterprise operations actions by providing edge enterprise operations data to a user via one or more text outputs (e.g., via a user interface of the one or more edge supported wearable devices 304A-304N) and/or audio outputs (e.g., via a microphone of the one or more edge supported wearable devices 304A-304N). In some embodiments, the one or more text outputs and/or audio outputs may be associated with an emotion enhancement. In this regard, the one or more text outputs and/or audio outputs may be associated with an emotion enhancement that includes the one or more text outputs and/or audio outputs having a particular tone or inflection (e.g., to motivate a user that needs to be motivated). In some embodiments, the one the one or more text outputs and/or audio outputs may be associated with a coded vocalization. In this regard, for example, one or more text outputs and/or audio outputs may be associated with a coded vocalization that includes the one or more text outputs and/or audio outputs including whistling in a specific pattern and/or rhythm. In some embodiments, the one or more text outputs and/or audio outputs may be associated with a vocal improvisation. In this regard, the one or more text outputs and/or audio outputs may be associated with a vocal improvisation that includes the one or more text outputs and/or audio outputs having one or more filler words, such as um and/or uh. In some embodiments, the one or more text outputs and/or audio outputs may be associated with a particular accent. In this regard, the one or more text outputs and/or audio outputs may be associated with a particular accent that includes the one or more text outputs and/or audio outputs having a particular accent that a user is familiar with.

In some embodiments, the one or more image capture devices 306A-306N may be configured to generate enterprise implementation data. For example, the one or more image capture devices 306A-306N may be configured to generate at least a portion of the enterprise implementation data received by the edge enterprise operations device 302.

In some embodiments, generating enterprise implementation data may include the one or more image capture devices 306A-306N being configured to capture enterprise implementation data. In this regard, for example, the one or more image capture devices 306A-306N may include one or more sensors configured to capture enterprise implementation data. For example, the one or more image capture devices 306A-306N may include one or more image sensors (e.g., one or more cameras) and/or the like configured to capture enterprise implementation data. In some embodiments, capturing enterprise implementation data may include the one or more image capture devices 306A-306N being configured to capture light in the visible spectrum. In some embodiments, capturing enterprise implementation data may include the one or more image capture devices 306A-306N being configured to capture light outside the visible spectrum (e.g., infrared light). In some embodiments, capturing enterprise implementation data may include the one or more image capture devices 306A-306N being configured to perform high speed capture of enterprise implementation data. In some embodiments, capturing enterprise implementation data may include the one or more image capture devices 306A-306N being configured to perform three-dimensional graph translation. In some embodiments, capturing enterprise implementation data may include the one or more image capture devices 306A-306N being configured to perform depth estimation.

### Example Methods

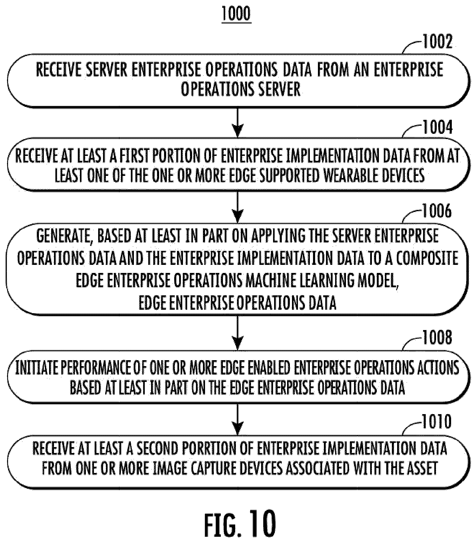

Referring now to FIG. 10, a flowchart providing an example method 1000 is illustrated. In this regard, FIG. 10 illustrates operations that may be performed by the enterprise operations server 140, the edge enterprise operations device 302, at least one of the one or more edge supported wearable devices 304A-304N, the database 150, and/or the like. In some embodiments, the example method 1000 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 1000.

As shown in block 1002, the method 1000 may include receiving server enterprise operations data from an enterprise operations server. As described above, in some embodiments, the edge enterprise operations device may be configured to receive the server enterprise operations data from the enterprise operations server. In some embodiments, such as when the edge enterprise operations device is physically located at the asset and the enterprise operations server is physically located at a remote location from the asset, the edge enterprise operations device may be configured to receive server enterprise operations data from the enterprise operations server via the network.

As shown in block 1004, the method 1000 may include receiving at least a first portion of enterprise implementation data from at least one of the one or more edge supported wearable devices. As described above, in some embodiments, enterprise implementation data may be one or more items of data representative of and/or associated with one or more implemented enterprise operations actions (e.g., one or more implemented server enabled enterprise operations actions, edge enabled enterprise operations actions, and/or wearable enabled enterprise operations actions). Additionally, or alternatively, enterprise implementation data may be one or more items of data representative of and/or associated with one or more enterprise operations actions that have been attempted to be implemented but have not been implemented (e.g., one or more server enabled enterprise operations actions, edge enabled enterprise operations actions, and/or wearable enabled enterprise operations actions that have been attempt to be implemented but have not been implemented). Additionally, or alternatively, enterprise implementation data may be one or more items of data representative of and/or associated with information associated with one or more implemented enterprise operations actions, information associated with one or more enterprise operations actions that have been attempted to be implemented, and/or other information associated with one or more enterprise operations actions (e.g., information associated with one or more server enabled enterprise operations actions, edge enabled enterprise operations actions, and/or wearable enabled enterprise operations actions that have been implemented and/or have been attempted to be implemented).

In some embodiments, the edge enterprise operations device may be configured to receive at least a portion of enterprise implementation data (e.g., a first portion of enterprise implementation data) from one or more of the one or more edge supported wearable devices. Said differently, of all of the enterprise implementation data received by the edge enterprise operations device, at least a portion of the received enterprise implementation data may be received from one or more of the one or more edge supported wearable devices. In this regard, for example, when the edge enterprise operations device and/or the one or more edge supported wearable devices are physically located at the asset, the edge enterprise operations device may be configured to receive a portion of enterprise implementation data from one or more of the one or more edge supported wearable devices via Wi-Fi, Bluetooth, and/or a physical connection (e.g., a wire).

As shown in block 1006, the method 1000 may include generating, at least in part on applying the server enterprise operations data and the enterprise implementation data to a composite edge enterprise operations machine learning model, edge enterprise operations data. As described above, in some embodiments, the edge enterprise operations device may be configured to generate edge enterprise operations data by applying the enterprise implementation data (e.g., enterprise implementation data captured by one or more of the one or more edge supported wearable devices and/or edge enterprise operations data captured by one or more of the one or more image capture devices) to a composite edge enterprise operations machine learning model.

In some embodiments, the composite edge enterprise operations machine learning model may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part generate edge enterprise operations data. The composite edge enterprise operations machine learning model may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques. In some embodiments, the edge enterprise operations device may comprise the composite edge enterprise operations machine learning model.

In some embodiments, the composite edge enterprise operations machine learning model may comprise an edge audio processing machine learning model. In some embodiments, the edge audio processing machine learning model may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part generate edge enterprise operations data by, for example, performing machine learning based audio processing. The edge audio processing machine learning model may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques.

In some embodiments, the composite edge enterprise operations machine learning model may comprise an edge image processing machine learning model. In some embodiments, the edge image processing machine learning model may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part generate edge enterprise operations data by, for example, performing machine learning based image processing. The edge image processing machine learning model may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques.

In some embodiments, the composite edge enterprise operations machine learning model may comprise an edge generative machine learning model. In some embodiments, the edge generative machine learning model may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part generate edge enterprise operations data by, for example, performing machine learning based generative processing. For example, the edge generative machine learning model may comprise a large language model. The edge generative machine learning model may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques.

In some embodiments, the composite edge enterprise operations machine learning model may comprise an edge impact and event machine learning model. In some embodiments, the edge impact and event machine learning model may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part generate edge enterprise operations data by, for example, performing machine learning based impact and event processing. The edge impact and event machine learning model may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques.

In some embodiments, the edge enterprise operations data may be one or more items of data representative of and/or associated with one or more edge enabled enterprise operations actions. In some embodiments, an edge enabled enterprise operations action may be one or more actions that may be performed by a user associated with the enterprise operations server, the edge enterprise operations device, the one or more edge supported wearable devices, and/or the asset that is enabled at least in part by the edge enterprise operations device. For example, when the asset is a warehouse, an edge enabled enterprise operations action may include picking an item from a location that has at least in part been enabled by the edge enterprise operations device (e.g., the edge enterprise operations device generated instructions for picking the item).

In some embodiments, an edge enabled workflow routine may include a plurality of edge enabled enterprise operations actions. In some embodiments, an edge enabled workflow routine may correspond to a task that may be performed by a user associated with the enterprise operations server, the edge enterprise operations device, the one or more edge supported wearable devices, and/or the asset that is enabled at least in part by the edge enterprise operations device. Said differently, edge enabled enterprise operations actions may correspond to one or more steps or intermediate tasks that may be performed by a user associated with the enterprise operations server, the edge enterprise operations device, the one or more edge supported wearable devices, and/or the asset to complete an edge enabled workflow routine.

In some embodiments, for example, an edge enabled workflow routine may include modifying a component in an engine (e.g., when the asset is a maintenance shop) and is enabled at least in part by the edge enterprise operations device. In this regard, for example, an edge enabled enterprise operations action in an edge enabled workflow routine may include removing fasteners attached to the engine component to provide access to the engine component that is being modified. As another example, an edge enabled workflow routine may include packaging an item for transport (e.g., when the asset is a distribution center) and is enabled at least in part by the edge enterprise operations device. In this regard, for example, an edge enabled enterprise operations action in the edge enabled workflow routine may include constructing a box for the item in which the item will be transferred. As another example, an edge enabled workflow routine may include performing a medical procedure (e.g., when the asset is a healthcare center) and is enabled at least in part by the edge enterprise operations device. In this regard, for example, an edge enabled enterprise operations action in the edge enabled workflow routine may include identifying equipment needed for the medical procedure. As another example, an edge enabled workflow routine may include picking and transporting items (e.g., when the asset is a warehouse) and is enabled at least in part by the edge enterprise operations device. In this regard, for example, an edge enabled enterprise operations action in the edge enabled workflow routine may include moving to a first location associated with a first item to be picked. As another example, an edge enabled workflow routine may include performing an industrial process (e.g., when the asset is an industrial plant) and is enabled at least in part by the edge enterprise operations device. In this regard, for example, an edge enabled enterprise operations action in the edge enabled workflow routine may include combining raw ingredients used in the industrial process.

In some embodiments, the edge enterprise operations device may be configured to generate edge enterprise operations data that is representative of instructions for performing one or more edge enabled enterprise operations actions. For example, the edge enterprise operations device may be configured to generate edge enterprise operations data that is representative of instructions on how to tighten a screw (e.g., turn clockwise). In some embodiments, for example, generating edge enterprise operations data that is representative of instructions for performing one or more edge enabled enterprise operations actions may include the edge enterprise operations device applying enterprise implementation data and/or server enterprise operations data to composite edge enterprise operations machine learning model. For example, generating edge enterprise operations data that is representative of instructions for performing one or more edge enabled enterprise operations actions may include the edge enterprise operations device applying enterprise implementation data and/or server enterprise operations data to the edge audio processing machine learning model and/or the edge generative machine learning model of the composite edge enterprise operations machine learning model.

In some embodiments, the edge enterprise operations device may be configured to generate edge enterprise operations data that is representative of a summary of one or more edge enabled enterprise operations actions performed by a user. For example, the edge enterprise operations device may be configured to generate edge enterprise operations data that includes a summary of one or more edge enabled enterprise operations actions performed by a user (e.g., the enterprise implementation data includes voice notes from the user about the enterprise operations actions performed by the user and generating edge enterprise operations data includes creating a summary from the voice notes). In some embodiments, for example, generating edge enterprise operations data that is representative of a summary of one or more edge enabled enterprise operations actions performed by a user may include the edge enterprise operations device applying enterprise implementation data and/or server enterprise operations data to the edge audio processing machine learning model and/or the edge generative machine learning model of the composite edge enterprise operations machine learning model.

In some embodiments, the edge enterprise operations device may be configured to generate edge enterprise operations data that is representative of answers to one or more questions asked by a user performing of one or more edge enabled enterprise operations actions. For example, while performing an enterprise operations action, a user may generate enterprise implementation data that is representative of a question asked by the user for clarification on a particular enterprise operations action and the edge enterprise operations data may be representative of an answer to the user's question. In some embodiments, for example, generating edge enterprise operations data that is representative of answers to one or more questions asked by a user performing one or more edge enabled enterprise operations actions may include the edge enterprise operations device applying enterprise implementation data and/or server enterprise operations data to the edge audio processing machine learning model and/or the edge generative machine learning model of the composite edge enterprise operations machine learning model.

In some embodiments, the edge enterprise operations device may be configured to generate edge enterprise operations data that is representative of one or more insights related to performing one or more edge enabled enterprise operations actions. For example, the edge enterprise operations device may be configured to generate an insight corresponding to the most efficient way to perform one or more edge enabled enterprise operations actions. In some embodiments, for example, generating edge enterprise operations data that is representative of one or more insights related to performing one or more edge enabled enterprise operations actions may include the edge enterprise operations device applying enterprise implementation data and/or server enterprise operations data to the edge impact and event machine learning model of the composite edge enterprise operations machine learning model.

In some embodiments, the edge enterprise operations device may be configured to generate edge enterprise operations data that is representative of a motivation metric associated with a user performing one or more edge enabled enterprise operations actions. For example, a motivation metric may indicate whether a user is content (e.g., is understanding instructions associated with an edge enabled enterprise operations action and is completing enterprise operations actions in an orderly and timely manner) or frustrated (e.g., is not understanding instructions associated with an edge enabled enterprise operations action and is not completing enterprise operations actions in an orderly and timely manner). In some embodiments, for example, generating edge enterprise operations data that is representative of a motivation metric associated with a user performing one or more edge enabled enterprise operations actions may include the edge enterprise operations device applying enterprise implementation data and/or server enterprise operations data to the edge impact and event machine learning model of the composite edge enterprise operations machine learning model.

In some embodiments, the edge enterprise operations device may be configured to generate edge enterprise operations data that is representative of an alert associated with the asset associated with a user performing one or more edge enabled enterprise operations actions. For example, the edge enterprise operations device may be configured to generate an alert that the asset should be evacuated. In some embodiments, for example, generating edge enterprise operations data that is representative of an alert associated with the asset associated with a user performing one or more edge enabled enterprise operations actions may include the edge enterprise operations device applying enterprise implementation data and/or server enterprise operations data to the edge impact and event machine learning model of the composite edge enterprise operations machine learning model.

In some embodiments, the edge enterprise operations device may be configured to generate edge enterprise operations data that is representative of an assignment related to performing one or more edge enabled enterprise operations actions. For example, when enterprise operations actions being performed by a user include picking various items in a warehouse, the edge enterprise operations data may be representative of an indication that a user should move from one item to another item. In some embodiments, for example, generating edge enterprise operations data that is representative of an assignment related to performing one or more edge enabled enterprise operations actions may include the edge enterprise operations device applying enterprise implementation data and/or server enterprise operations data to the edge impact and event machine learning model of the composite edge enterprise operations machine learning model.

In some embodiments, the edge enterprise operations device may be configured to generate edge enterprise operations data that is representative of a user performing one or more edge enabled enterprise operations actions. For example, the edge enterprise operations device may be configured to generate edge enterprise operations data that is representative of a user unique identifier associated with a user. In this regard, for example, the edge enterprise operations device may be configured to generate edge enterprise operations data based at least in part on a user unique identifier. For example, the edge enterprise operations device may be configured to generate edge enterprise operations data that is representative of instructions for performing one or more edge enabled enterprise operations actions that is personalized for a particular user based at least in part on the user's user unique identifier. In some embodiments, for example, generating edge enterprise operations data that is representative of a user performing one or more edge enabled enterprise operations actions may include the edge enterprise operations device applying enterprise implementation data and/or server enterprise operations data to the edge impact and event machine learning model of the composite edge enterprise operations machine learning model.

In some embodiments, the edge enterprise operations device may be configured to generate edge enterprise operations data that is representative of an indication that a battery associated with the one or more edge supported wearable devices is low. For example, the edge enterprise operations device may be configured to generate edge enterprise operations data that includes an indication that a battery associated with the one or more edge supported wearable devices is low based at least in part on determining the number of enterprise operations actions that have been performed, the distance that one of the one or more edge supported wearable devices have traveled, and/or the amount of time since one of the one or more edge supported wearable devices has been charged. In some embodiments, for example, generating edge enterprise operations data that is representative of an indication that a battery associated with the one or more edge supported wearable devices is low may include the edge enterprise operations device applying enterprise implementation data and/or server enterprise operations data to the edge impact and event machine learning model of the composite edge enterprise operations machine learning model.

In some embodiments, the edge enterprise operations device may be configured to generate edge enterprise operations data that is representative of an indication that a signal associated with the one or more edge supported wearable devices is low. For example, the edge enterprise operations device may be configured to generate edge enterprise operations data that includes an indication that the signal is low based at least in part on a distance between the one or more edge supported wearable devices and the edge enterprise operations device. In some embodiments, for example, generating edge enterprise operations data that is representative of an indication that a signal associated with the one or more edge supported wearable devices is low may include the edge enterprise operations device applying enterprise implementation data and/or server enterprise operations data to the edge impact and event machine learning model of the composite edge enterprise operations machine learning model.

In some embodiments, the edge enterprise operations device may be configured to generate edge enterprise operations data that is representative of one or more item tracking identifiers associated with an item interacted with by a user performing one or more edge enabled enterprise operations actions. For example, the edge enterprise operations device may be configured to generate edge enterprise operations data that includes an item tracking identifier associated with a package a user prepared when performing one or more edge enabled enterprise operations actions. In some embodiments, for example, generating edge enterprise operations data that is representative of one or more item tracking identifiers associated with an item interacted with by a user performing one or more edge enabled enterprise operations actions may include the edge enterprise operations device applying enterprise implementation data and/or server enterprise operations data to the edge impact and event machine learning model of the composite edge enterprise operations machine learning model.

In some embodiments, the edge enterprise operations device may be configured to generate edge enterprise operations data that is representative of a health metric associated with a user performing one or more edge enabled enterprise operations actions based at least in part on data representative of a user's voice. For example, a health metric may indicate a user's health, emotions, and/or mental state based at least in part on data representative of the user's voice. In some embodiments, for example, generating edge enterprise operations data that is representative of a health metric associated with a user performing one or more edge enabled enterprise operations actions based at least in part on data representative of a user's voice may include the edge enterprise operations device applying enterprise implementation data and/or server enterprise operations data to the edge impact and event machine learning model of the composite edge enterprise operations machine learning model.

In some embodiments, the edge enterprise operations device may be configured to generate edge enterprise operations data that is representative of movement data associated with of one or more individuals within the asset. For example, movement data may include indications about the direction and speed of one or more individuals within the asset. In some embodiments, for example, generating edge enterprise operations data that is representative of movement data associated with of one or more individuals within the asset may include the edge enterprise operations device applying enterprise implementation data and/or server enterprise operations data to the edge image processing machine learning model of the composite edge enterprise operations machine learning model.

In some embodiments, the edge enterprise operations device may be configured to generate edge enterprise operations data that is representative of access data indicative of unauthorized access to the asset by one or more individuals within the asset. In some embodiments, for example, generating edge enterprise operations data that is representative of access data indicative of unauthorized access to the asset by one or more individuals within the asset may include the edge enterprise operations device applying enterprise implementation data and/or server enterprise operations data to the edge image processing machine learning model of the composite edge enterprise operations machine learning model.

In some embodiments, the edge enterprise operations device may be configured to generate edge enterprise operations data that is representative of object data indicative of one or more objects in the asset. For example, object data may be indicative of the condition of one or more objects in the asset (e.g., whether a box is damaged and should be replaced). In some embodiments, for example, generating edge enterprise operations data that is representative of representative of object data indicative of one or more objects in the asset may include the edge enterprise operations device applying enterprise implementation data and/or server enterprise operations data to the edge image processing machine learning model of the composite edge enterprise operations machine learning model.

In some embodiments, the edge enterprise operations device may be configured to generate edge enterprise operations data that is representative of facial recognition data which identifies individuals in the asset based at least in part on facial recognition techniques. In some embodiments, for example, generating edge enterprise operations data that is representative of facial recognition data which identifies individuals in the asset based at least in part on facial recognition techniques may include the edge enterprise operations device applying enterprise implementation data and/or server enterprise operations data to the edge image processing machine learning model of the composite edge enterprise operations machine learning model.

In some embodiments, the edge enterprise operations device may be configured to generate edge enterprise operations data that is representative of individual count data which identifies the number of individuals within the asset. In some embodiments, for example, generating edge enterprise operations data that is representative of individual count data which identifies the number of individuals within the asset may include the edge enterprise operations device applying enterprise implementation data and/or server enterprise operations data to the edge image processing machine learning model of the composite edge enterprise operations machine learning model.

In some embodiments, the edge enterprise operations device may be configured to generate edge enterprise operations data that is representative of one or more reports. For example, the one or more reports may include information on enterprise operations actions that have been performed. In some embodiments, for example, generating edge enterprise operations data that is representative of one or more reports may include the edge enterprise operations device applying enterprise implementation data and/or server enterprise operations data to the edge generative machine learning model of the composite edge enterprise operations machine learning model.

In some embodiments, the edge enterprise operations device may be configured to generate edge enterprise operations data that is representative data queried from the enterprise operations server and/or one or more external resources. In some embodiments, for example, generating edge enterprise operations data that is representative data queried from the enterprise operations server and/or one or more external resources may include the edge enterprise operations device applying enterprise implementation data and/or server enterprise operations data to the edge generative machine learning model of the composite edge enterprise operations machine learning model.

In some embodiments, the edge enterprise operations device may be configured to generate edge enterprise operations data that is representative of one or more future trends associated with the asset or one or more enterprise operations actions. In some embodiments, for example, generating edge enterprise operations data that is representative of one or more future trends associated with the asset or one or more enterprise operations actions may include the edge enterprise operations device applying enterprise implementation data and/or server enterprise operations data to the edge impact and event machine learning model of the composite edge enterprise operations machine learning model.

In some embodiments, the edge enterprise operations device may be configured to generate edge enterprise operations data that is representative of one or more future reminders associated with one or more future enterprise operations actions. In some embodiments, for example, generating edge enterprise operations data that is representative of one or more future reminders associated with one or more future enterprise operations actions may include the edge enterprise operations device applying enterprise implementation data and/or server enterprise operations data to the edge impact and event machine learning model of the composite edge enterprise operations machine learning model.

In some embodiments, generating edge enterprise operations data may include the edge enterprise operations device being configured to transform enterprise implementation data that is representative of an internal vocalization of a user into natural language text and/or natural language audio representative of a user's intended meaning of the internal vocalization. For example, the edge enterprise operations device may be configured to transform enterprise implementation data representative of a grunt by a user into natural language text and/or natural language audio representative of the user's intended meaning of the internal vocalization (e.g., yes). Said differently, for example, by applying the enterprise implementation data and/or the server enterprise operations data to the edge audio processing machine learning model and/or the edge generative machine learning model of the composite edge enterprise operations machine learning model, the edge enterprise operations device may be configured to transform enterprise implementation data that is representative of an internal vocalization of a user into natural language text and/or natural language audio representative of a user's intended meaning of the internal vocalization.

In some embodiments, generating edge enterprise operations data may include the edge enterprise operations device being configured to transform enterprise implementation data that is representative of a metaphor provided a user into natural language text and/or natural language audio representative of a user's intended meaning of the metaphor. Said differently, for example, by applying the enterprise implementation data and/or the server enterprise operations data to the edge audio processing machine learning model and/or the edge generative machine learning model of the composite edge enterprise operations machine learning model, the edge enterprise operations device may be configured to transform enterprise implementation data that is representative of a metaphor provided by a user into natural language text and/or natural language audio representative of a user's intended meaning of the metaphor.

In some embodiments, generating edge enterprise operations data may include the edge enterprise operations device being configured to transform enterprise implementation data that is representative of a non-verbal cue provided by a user into natural language text and/or natural language audio representative of a user's intended meaning of the non-verbal cue. For example, the edge enterprise operations device may be configured to transform enterprise implementation data representative of a sigh, cough, whisper, and/or the like by a user into natural language text and/or natural language audio representative of the user's intended meaning of the non-verbal cue. Said differently, for example, by applying the enterprise implementation data and/or the server enterprise operations data to the edge audio processing machine learning model and/or the edge generative machine learning model of the composite edge enterprise operations machine learning model, the edge enterprise operations device may be configured to transform enterprise implementation data that is representative of a non-verbal cue provided by a user into natural language text and/or natural language audio representative of a user's intended meaning of the non-verbal cue.

In some embodiments, generating edge enterprise operations data may include the edge enterprise operations device being configured to transform enterprise implementation data that includes data representative of a user's voice into data representative of an anonymized version of the user's voice (e.g., such that a user cannot be identified from the enterprise implementation data based at least in part on the user's voice). Said differently, for example, by applying the enterprise implementation data and/or the server enterprise operations data to the edge audio processing machine learning model and/or the edge generative machine learning model of the composite edge enterprise operations machine learning model, the edge enterprise operations device may be configured to transform enterprise implementation data that includes data representative of a user's voice into data representative of an anonymized version of the user's voice.

In some embodiments, generating edge enterprise operations data may include the edge enterprise operations device being configured to transform enterprise implementation data that includes data representative of information provided by a user in a first language into data representative of information provided by the user in a second language. For example, the edge enterprise operations device may be configured to transform data representative of information provided by a user in Spanish into data representative of information provided by the user in English. Said differently, for example, by applying the enterprise implementation data and/or the server enterprise operations data to the edge audio processing machine learning model and/or the edge generative machine learning model of the composite edge enterprise operations machine learning model, the edge enterprise operations device may be configured to transform enterprise implementation data that includes data representative of information provided by a user in a first language into data representative of information provided by the user in a second language.

In some embodiments, generating edge enterprise operations data may include the edge enterprise operations device being configured to transform enterprise implementation data that includes data representative of information provided by a user into data representative of information provided by the user and a policy associated with the information provided by the user (e.g., the edge enterprise operations device is configured supplement information provided by a user with information about a policy associated with the information provided by the user). Said differently, for example, by applying the enterprise implementation data and/or the server enterprise operations data to the edge audio processing machine learning model and/or the edge generative machine learning model of the composite edge enterprise operations machine learning model, the edge enterprise operations device may be configured to transform enterprise implementation data that includes data representative of information provided by a user into data representative of information provided by the user and a policy associated with the information provided by the user.

As shown in block 1008, the method 1000 may include initiating performance of one or more edge enabled enterprise operations actions based at least in part on the edge enterprise operations data. As described above, in some embodiments, the edge enterprise operations device may be configured to initiate performance of one or more edge enabled enterprise operations actions based at least in part on edge enterprise operations data. In some embodiments, the edge enterprise operations device may be configured to initiate performance of one or more edge enabled enterprise operations actions by providing edge enterprise operations data to one or more of the one or more edge supported wearable devices. For example, the edge enterprise operations device may be configured to provide edge enterprise operations data to one or more of the one or more edge supported wearable devices that is representative of and/or associated with one or more edge enabled enterprise operations actions of an edge enterprise workflow routine. In some embodiments, such as when the edge enterprise operations device is physically located at the asset and the one or more edge supported wearable devices are physically located at the asset, the edge enterprise operations device may be configured to provide edge enterprise operations data to the edge enterprise operations device via Wi-Fi, Bluetooth, and/or a physical connection (e.g., a wire).

As shown in block 1010, the method 1000 may include receiving at least a second portion of enterprise implementation data from one or more image capture devices associated with the asset. As described above, in some embodiments, the edge enterprise operations device may be configured to receive at least a portion of enterprise implementation data (e.g., a second portion of enterprise implementation data) from one or more of the one or more image capture devices. Said differently, of all of the enterprise implementation data received by the edge enterprise operations device, at least a portion of the received enterprise implementation data may be received from one or more of the one or more image capture devices. In this regard, for example, when the edge enterprise operations device and/or the one or more image capture devices are physically located at the asset, the edge enterprise operations device may be configured to receive a portion of enterprise implementation data from one or more of the one or more image capture devices via Wi-Fi, Bluetooth, and/or a physical connection (e.g., a wire).

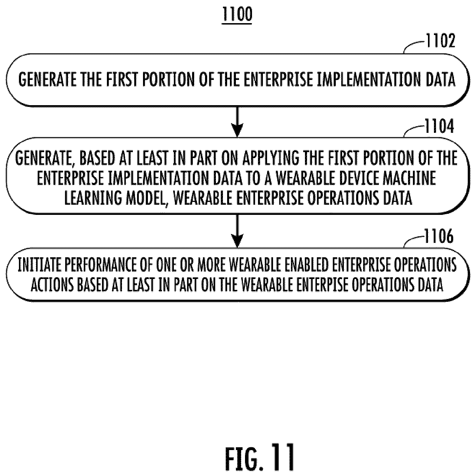

Referring now to FIG. 11, a flowchart providing an example method 1100 is illustrated. In this regard, FIG. 11 illustrates operations that may be performed by the enterprise operations server 140, the edge enterprise operations device 302, at least one of the one or more edge supported wearable devices 304A-304N, the database 150, and/or the like. In some embodiments, the example method 1100 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 1100.

As shown in block 1102, the method 1100 may include generating the first portion of the enterprise implementation data. As described above, in some embodiments, generating enterprise implementation data may include the one or more edge supported wearable devices being configured to capture enterprise implementation data. In this regard, for example, the one or more edge supported wearable devices may include one or more sensors configured to capture enterprise implementation data. For example, the one or more edge supported wearable devices may include one or more audio sensors, telemetry sensors, image sensors, location sensors, worker characteristic sensors, environmental state sensors, electromagnetic energy sensors, force detection sensors (e.g., accelerometers, vibration sensors, visual sensors, and/or the like configured to capture enterprise implementation data.

In some embodiments, generating enterprise implementation data may include processing the enterprise implementation data using a wearable device machine learning model (e.g., processing the captured enterprise implementation data using the wearable device machine learning model). In some embodiments, the wearable device machine learning model may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to at least in part process enterprise implementation data and/or generate wearable enterprise operations data . The wearable device machine learning model may utilize one or more of any type of machine learning, rules-based, and/or artificial intelligence techniques including one or more of supervised learning (e.g., using user feedback), unsupervised learning, semi-supervised learning, reinforcement learning, computer vision techniques, sequence modeling techniques, language processing techniques, neural network techniques, and/or generative artificial intelligence techniques. In some embodiments, the wearable device machine learning model may comprise a large language model. In some embodiments, one or more of the edge supported wearable devices may comprise the wearable device machine learning model (e.g., each edge supported wearable devices its own wearable device machine learning model).

As shown in block 1104, the method 1100 may include generating, based at least in part on applying the first portion of the enterprise implementation data to a wearable device machine learning model, wearable enterprise operations data. As described above, in some embodiments, the one or more edge supported wearable devices may be configured to generate wearable enterprise operations data by applying the enterprise implementation data (e.g., enterprise implementation data captured by one or more of the one or more edge supported wearable devices) to the wearable device machine learning model.

In some embodiments, the wearable enterprise operations data may be one or more items of data representative of and/or associated with one or more wearable enabled enterprise operations actions. In some embodiments, a wearable enabled enterprise operations action may be one or more actions that may be performed by a user associated with the enterprise operations server, the edge enterprise operations device, the one or more edge supported wearable devices, and/or the asset that is enabled at least in part by one or more of the one or more edge supported wearable devices.

In some embodiments, a wearable enabled workflow routine may include a plurality of wearable enabled enterprise operations actions. In some embodiments, a wearable enabled workflow routine may correspond to a task that may be performed by a user associated with the enterprise operations server, the edge enterprise operations device, the one or more edge supported wearable devices, and/or the asset that is enabled at least in part by one or more of the one or more edge supported wearable devices. Said differently, wearable enabled enterprise operations actions may correspond to one or more steps or intermediate tasks that may be performed by a user associated with the enterprise operations server, the edge enterprise operations device, the one or more edge supported wearable devices, and/or the asset to complete a wearable enabled workflow routine.

In some embodiments, for example, a wearable enabled workflow routine may include modifying a component in an engine (e.g., when the asset is a maintenance shop) and is enabled at least in part by one or more of the one or more edge supported wearable devices. In this regard, for example, a wearable enabled enterprise operations action in a wearable enabled workflow routine may include removing fasteners attached to the engine component to provide access to the engine component that is being modified. As another example, a wearable enabled workflow routine may include packaging an item for transport (e.g., when the asset is a distribution center) and is enabled at least in part by one or more of the one or more edge supported wearable devices. In this regard, for example, a wearable enabled enterprise operations action in the wearable enabled workflow routine may include constructing a box for the item in which the item will be transferred. As another example, a wearable enabled workflow routine may include performing a medical procedure (e.g., when the asset is a healthcare center) and is enabled at least in part by one or more of the one or more edge supported wearable devices. In this regard, for example, a wearable enabled enterprise operations action in the wearable enabled workflow routine may include identifying equipment needed for the medical procedure. As another example, a wearable enabled workflow routine may include picking and transporting items (e.g., when the asset is a warehouse) and is enabled at least in part by one or more of the one or more edge supported wearable devices. In this regard, for example, a wearable enabled enterprise operations action in the wearable enabled workflow routine may include moving to a first location associated with a first item to be picked. As another example, a wearable enabled workflow routine may include performing an industrial process (e.g., when the asset is an industrial plant) and is enabled at least in part by one or more of the one or more edge supported wearable devices. In this regard, for example, a wearable enabled enterprise operations action in the wearable enabled workflow routine may include combining raw ingredients used in the industrial process.

In some embodiments, the one or more edge supported wearable devices may be configured to generate wearable enterprise operations data that is representative of instructions for performing one or more wearable enabled enterprise operations actions. For example, the one or more edge supported wearable devices may be configured to generate wearable enterprise operations data that is representative of instructions on how to tighten a screw (e.g., turn clockwise). In some embodiments, for example, generating wearable enterprise operations data that is representative of instructions for performing one or more wearable enabled enterprise operations actions may include the one or more edge supported wearable devices applying enterprise implementation data to the wearable device machine learning model.

In some embodiments, the one or more edge supported wearable devices may be configured to generate wearable enterprise operations data that is representative of a user performing one or more wearable enabled enterprise operations actions. For example, the one or more edge supported wearable devices may be configured to generate wearable enterprise operations data that is representative of a user unique identifier associated with a user. In this regard, for example, the one or more edge supported wearable devices may be configured to generate wearable enterprise operations data based at least in part on a user unique identifier. For example, the one or more edge supported wearable devices may be configured to generate wearable enterprise operations data that is representative of instructions for performing one or more wearable enabled enterprise operations actions that is personalized for a particular user based at least in part on the user's user unique identifier. In some embodiments, for example, generating wearable enterprise operations data that is representative of a user performing one or more wearable enabled enterprise operations actions may include the one or more edge supported wearable devices applying enterprise implementation data to the wearable device machine learning model.

In some embodiments, the one or more edge supported wearable devices may be configured to generate wearable enterprise operations data that is representative of one or more insights related to performing one or more wearable enabled enterprise operations actions. For example, the one or more edge supported wearable devices may be configured to generate an insight corresponding to the most efficient way to perform one or more wearable enabled enterprise operations actions. In some embodiments, for example, generating wearable enterprise operations data that is representative of one or more insights related to performing one or more wearable enabled enterprise operations actions may include the one or more edge supported wearable devices applying enterprise implementation data to the wearable device machine learning model.

In some embodiments, the one or more edge supported wearable devices may be configured to generate wearable enterprise operations data that is representative of a motivation metric associated with a user performing one or more wearable enabled enterprise operations actions. For example, a motivation metric may indicate whether a user is content (e.g., is understanding instructions provided by the one or more edge supported wearable devices and is completing enterprise operations actions in an orderly and timely manner) or frustrated (e.g., is not understanding instructions provided by the one or more edge supported wearable devices and is not completing enterprise operations actions in an orderly and timely manner). In some embodiments, for example, generating wearable enterprise operations data that is r representative of a motivation metric associated with a user performing one or more wearable enabled enterprise operations actions may include the one or more edge supported wearable devices applying enterprise implementation data to the wearable device machine learning model.

In some embodiments, the one or more edge supported wearable devices may be configured to generate wearable enterprise operations data that is representative of an alert associated with the asset associated with a user performing one or more wearable enabled enterprise operations actions. For example, the one or more edge supported wearable devices may be configured to generate an alert that the asset should be evacuated. In some embodiments, for example, generating wearable enterprise operations data that is representative of an alert associated with the asset associated with a user performing one or more wearable enabled enterprise operations actions may include the one or more edge supported wearable devices applying enterprise implementation data to the wearable device machine learning model.

In some embodiments, the one or more edge supported wearable devices may be configured to generate wearable enterprise operations data that is representative of an assignment related to performing one or more wearable enabled enterprise operations actions. For example, when enterprise operations actions being performed by a user include picking various items in a warehouse, the wearable enterprise operations data may be representative of an indication that a user should move from one item to another item. In some embodiments, for example, generating wearable enterprise operations data that is representative of an assignment related to performing one or more wearable enabled enterprise operations actions may include the one or more edge supported wearable devices applying enterprise implementation data to the wearable device machine learning model.

In some embodiments, the one or more edge supported wearable devices may be configured to generate wearable enterprise operations data that is representative of answers to one or more questions asked by a user performing one or more wearable enabled enterprise operations actions. For example, while performing an enterprise operations action, a user may query the one or more edge supported wearable devices to ask for clarification on a particular enterprise operations action and the wearable enterprise operations data may be representative of an answer to the user's question. In some embodiments, for example, generating wearable enterprise operations data that is representative of answers to one or more questions asked by a user performing one or more wearable enabled enterprise operations actions may include the one or more edge supported wearable devices applying enterprise implementation data to the wearable device machine learning model.

In some embodiments, the one or more edge supported wearable devices may be configured to generate wearable enterprise operations data that is representative of a summary of one or more wearable enabled enterprise operations actions performed by a user. For example, the one or more edge supported wearable devices may be configured to generate wearable enterprise operations data that includes a summary of one or more wearable enabled enterprise operations actions performed by a user (e.g., the enterprise implementation data includes voice notes from the user about the enterprise operations actions performed by the user and generating wearable enterprise operations data includes creating a summary from the voice notes). In some embodiments, for example, generating wearable enterprise operations data that is representative of a summary of one or more wearable enabled enterprise operations actions performed by a user may include the one or more edge supported wearable devices applying enterprise implementation data to the wearable device machine learning model.

In some embodiments, the one or more edge supported wearable devices may be configured to generate wearable enterprise operations data that is representative of an indication that a battery associated with the one or more edge supported wearable devices is low. For example, the one or more edge supported wearable devices may be configured to generate wearable enterprise operations data that includes an indication that a battery associated with the one or more edge supported wearable devices is low based at least in part on determining the number of enterprise operations actions that have been performed, the distance that one of the one or more edge supported wearable devices have traveled, and/or the amount of time since one of the one or more edge supported wearable devices has been charged. In some embodiments, for example, generating wearable enterprise operations data that is representative of an indication that a battery associated with the one or more edge supported wearable devices is low may include the one or more edge supported wearable devices applying enterprise implementation data to the wearable device machine learning model.

In some embodiments, the one or more edge supported wearable devices may be configured to generate wearable enterprise operations data that is representative of an indication that a signal associated with the one or more edge supported wearable devices is low. For example, the one or more edge supported wearable devices may be configured to generate wearable enterprise operations data that includes an indication that the signal is low based at least in part on a distance between the one or more edge supported wearable devices and the edge enterprise operations device. In some embodiments, for example, generating wearable enterprise operations data that is representative of an indication that a signal associated with the one or more edge supported wearable devices is low may include the one or more edge supported wearable devices applying enterprise implementation data to the wearable device machine learning model.

In some embodiments, the one or more edge supported wearable devices may be configured to generate wearable enterprise operations data that is representative of one or more item tracking identifiers associated with an item interacted with by a user performing one or more wearable enabled enterprise operations actions. For example, the one or more edge supported wearable devices may be configured to generate wearable enterprise operations data that includes an item tracking identifier associated with a package a user prepared when performing one or more wearable enabled enterprise operations actions. In some embodiments, for example, generating wearable enterprise operations data that is representative of one or more item tracking identifiers associated with an item interacted with by a user performing one or more wearable enabled enterprise operations actions may include the one or more edge supported wearable devices applying enterprise implementation data to the wearable device machine learning model.

In some embodiments, the one or more edge supported wearable devices may be configured to generate wearable enterprise operations data that is representative of a health metric associated with a user performing one or more wearable enabled enterprise operations actions based at least in part on data representative of a user's voice. For example, a health metric may indicate a user's health, emotions, and/or mental state based at least in part on data representative of the user's voice. In some embodiments, for example, generating wearable enterprise operations data that is representative of a health metric associated with a user performing one or more wearable enabled enterprise operations actions based at least in part on data representative of a user's voice may include the one or more edge supported wearable devices applying enterprise implementation data to the wearable device machine learning model.

In some embodiments, generating wearable enterprise operations data may include the one or more edge supported wearable devices being configured to transform enterprise implementation data that is representative of an internal vocalization of a user into natural language text and/or natural language audio representative of a user's intended meaning of the internal vocalization. For example, the one or more edge supported wearable devices may be configured to transform enterprise implementation data representative of a grunt by a user into natural language text and/or natural language audio representative of the user's intended meaning of the internal vocalization (e.g., yes). Said differently, for example, by applying the enterprise implementation data (e.g., enterprise implementation data captured by one or more of the one or more edge supported wearable devices) to the wearable device machine learning model (e.g., when the wearable device machine learning model includes a large language model), the one or more edge supported wearable devices may be configured to transform enterprise implementation data that is representative of an internal vocalization of a user into natural language text and/or natural language audio representative of a user's intended meaning of the internal vocalization.

In some embodiments, generating wearable enterprise operations data may include the one or more edge supported wearable devices being configured to transform enterprise implementation data that is representative of a metaphor provided a user into natural language text and/or natural language audio representative of a user's intended meaning of the metaphor. Said differently, for example, by applying the enterprise implementation data (e.g., enterprise implementation data captured by one or more of the one or more edge supported wearable devices) to the wearable device machine learning model (e.g., when the wearable device machine learning model includes a large language model), the one or more edge supported wearable devices may be configured to transform enterprise implementation data that is representative of a metaphor provided by a user into natural language text and/or natural language audio representative of a user's intended meaning of the metaphor.

In some embodiments, generating wearable enterprise operations data may include the one or more edge supported wearable devices being configured to transform enterprise implementation data that is representative of a non-verbal cue provided by a user into natural language text and/or natural language audio representative of a user's intended meaning of the non-verbal cue. For example, the one or more edge supported wearable devices may be configured to transform enterprise implementation data representative of a sigh, cough, whisper, and/or the like by a user into natural language text and/or natural language audio representative of the user's intended meaning of the non-verbal cue. Said differently, for example, by applying the enterprise implementation data (e.g., enterprise implementation data captured by one or more of the one or more edge supported wearable devices) to the wearable device machine learning model (e.g., when the wearable device machine learning model includes a large language model), the one or more edge supported wearable devices may be configured to transform enterprise implementation data that is representative of a non-verbal cue provided by a user into natural language text and/or natural language audio representative of a user's intended meaning of the non-verbal cue.

In some embodiments, generating wearable enterprise operations data may include the one or more edge supported wearable devices being configured to transform enterprise implementation data that includes data representative of a user's voice into data representative of an anonymized version of the user's voice (e.g., such that a user cannot be identified from the enterprise implementation data based at least in part on the user's voice). Said differently, for example, by applying the enterprise implementation data (e.g., enterprise implementation data captured by one or more of the one or more edge supported wearable devices) to the wearable device machine learning model (e.g., when the wearable device machine learning model includes a large language model), the one or more edge supported wearable devices may be configured to transform enterprise implementation data that includes data representative of a user's voice into data representative of an anonymized version of the user's voice.

In some embodiments, generating wearable enterprise operations data may include the one or more edge supported wearable devices being configured to transform enterprise implementation data that includes data representative of information provided by a user in a first language into data representative of information provided by the user in a second language. For example, the one or more edge supported wearable devices may be configured to transform data representative of information provided by a user in Spanish into data representative of information provided by the user in English. Said differently, for example, by applying the enterprise implementation data (e.g., enterprise implementation data captured by one or more of the one or more edge supported wearable devices) to the wearable device machine learning model (e.g., when the wearable device machine learning model includes a large language model), the one or more edge supported wearable devices may be configured to transform enterprise implementation data that includes data representative of information provided by a user in a first language into data representative of information provided by the user in a second language.

In some embodiments, generating wearable enterprise operations data may include the one or more edge supported wearable devices being configured to transform enterprise implementation data that includes data representative of information provided by a user into data representative of information provided by the user and a policy associated with the information provided by the user (e.g., the one or more edge supported wearable devices are configured supplement information provided by a user with information about a policy associated with the information provided by the user). Said differently, for example, by applying the enterprise implementation data (e.g., enterprise implementation data captured by one or more of the one or more edge supported wearable devices) to the wearable device machine learning model (e.g., when the wearable device machine learning model includes a large language model), the one or more edge supported wearable devices may be configured to transform enterprise implementation data that includes data representative of information provided by a user into data representative of information provided by the user and a policy associated with the information provided by the user.

As shown in block 1106, the method 1100 may include initiating performance of one or more wearable enabled enterprise operations actions based at least in part on the wearable enterprise operations data. As described above, in some embodiments, the one or more edge supported wearable devices may be configured to initiate performance of one or more wearable enabled enterprise operations actions based at least in part on wearable enterprise operations data. In some embodiments, the one or more edge supported wearable devices may be configured to initiate performance of one or more wearable enabled enterprise operations actions by providing wearable enterprise operations data to a user. For example, the one or more edge supported wearable devices may be configured to initiate performance of one or more wearable enabled enterprise operations actions by providing wearable enterprise operations data to a user that is representative of instructions for performing one or more wearable enabled enterprise operations actions (e.g., wearable enterprise operations data that is representative of instructions on how to tighten a screw (e.g., turn clockwise)).

In some embodiments, the one or more edge supported wearable devices may be configured to initiate performance of one or more wearable enabled enterprise operations actions by providing wearable enterprise operations data to a user via one or more text outputs (e.g., via a user interface of the one or more edge supported wearable devices) and/or audio outputs (e.g., via a microphone of the one or more edge supported wearable devices). In some embodiments, the one or more text outputs and/or audio outputs may be associated with an emotion enhancement. In this regard, the one or more text outputs and/or audio outputs may be associated with an emotion enhancement that includes the one or more text outputs and/or audio outputs having a particular tone or inflection (e.g., to motivate a user that the one or more edge supported wearable devices has determined needs to be motivated). In some embodiments, the one the one or more text outputs and/or audio outputs may be associated with a coded vocalization. In this regard, for example, one or more text outputs and/or audio outputs may be associated with a coded vocalization that includes the one or more text outputs and/or audio outputs including whistling in a specific pattern and/or rhythm. In some embodiments, the one or more text outputs and/or audio outputs may be associated with a vocal improvisation. In this regard, the one or more text outputs and/or audio outputs may be associated with a vocal improvisation that includes the one or more text outputs and/or audio outputs having one or more filler words, such as um and/or uh. In some embodiments, the one or more text outputs and/or audio outputs may be associated with a particular accent. In this regard, the one or more text outputs and/or audio outputs may be associated with a particular accent that includes the one or more text outputs and/or audio outputs having a particular accent that a user is familiar with.

In some embodiments, the one or more edge supported wearable devices may be configured to initiate performance of one or more wearable enabled enterprise operations actions by causing a battery associated with one or more edge supported wearable devices to be charged. For example, the one or more edge supported wearable devices may be configured to initiate performance of one or more wearable enabled enterprise operations actions by causing a battery associated with one or more edge supported wearable devices to be charged when wearable enterprise operations data is representative of an indication that a battery associated with the one or more edge supported wearable devices is low.

In some embodiments, the one or more edge supported wearable devices may be configured to initiate performance of one or more wearable enabled enterprise operations actions by causing a signal associated with one or more edge supported wearable devices to be boosted. For example, the one or more edge supported wearable devices may be configured to initiate performance of one or more wearable enabled enterprise operations actions by causing a signal associated with one or more edge supported wearable devices to be boosted when wearable enterprise operations data is representative of an indication that a signal associated with the one or more edge supported wearable devices is low.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this specification contains many specific embodiment and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. An enterprise operations system comprising:
one or more edge supported wearable devices; and
an edge enterprise operations device comprising at least one processor and at least one non-transitory memory including computer-coded instructions thereon, the computer coded instructions, with the at least one processor, cause the edge enterprise operations device to:
receive server enterprise operations data from an enterprise operations server;
receive at least a first portion of enterprise implementation data from at least one of the one or more edge supported wearable devices;
generate, based at least in part on applying the server enterprise operations data and the enterprise implementation data to a composite edge enterprise operations machine learning model, edge enterprise operations data; and
initiate performance of one or more edge enabled enterprise operations actions based at least in part on the edge enterprise operations data.

2. The enterprise operations system of claim 1, wherein the edge enterprise operations device is physically located at an asset.

3. The enterprise operations system of claim 2, wherein the computer coded instructions, further with the at least one processor, cause the enterprise operations system to:
receive at least a second portion of enterprise implementation data from one or more image capture devices associated with the asset.

4. The enterprise operations system of claim 1, wherein the enterprise operations server is physically located at a remote location and in communication with the edge enterprise operations device via at least a network.

5. The enterprise operations system of claim 1, wherein the composite edge enterprise operations machine learning model comprises an edge audio processing machine learning model.

6. The enterprise operations system of claim 1, wherein the composite edge enterprise operations machine learning model comprises an edge image processing machine learning model.

7. The enterprise operations system of claim 1, wherein the composite edge enterprise operations machine learning model comprises an edge generative machine learning model.

8. The enterprise operations system of claim 1, wherein the composite edge enterprise operations machine learning model comprises an edge impact and event machine learning model.

9. The enterprise operations system of claim 1, wherein at least one of the one or more edge supported wearable devices comprises at least one processor and at least one non-transitory memory including computer-coded instructions thereon, the computer coded instructions, with the at least one processor, cause the at least one of the one or more edge supported wearable devices to:
generate the first portion of the enterprise implementation data, wherein generating the first portion of the enterprise implementation data comprises:
capturing the first portion of the enterprise implementation data.

10. The enterprise operations system of claim 1, wherein at least one of the one or more edge supported wearable devices comprises at least one processor and at least one non-transitory memory including computer-coded instructions thereon, the computer coded instructions, with the at least one processor, cause the at least one of the one or more edge supported wearable devices to:
generate the first portion of the enterprise implementation data, wherein generating the first portion of the enterprise implementation data comprises:
capturing enterprise implementation data; and
processing the enterprise implementation data using a wearable device machine learning model.

11. The enterprise operations system of claim 1, wherein at least one of the one or more edge supported wearable devices comprises at least one processor and at least one non-transitory memory including computer-coded instructions thereon, the computer coded instructions, with the at least one processor, cause the at least one of the one or more edge supported wearable devices to:
generate the first portion of the enterprise implementation data, wherein generating the first portion of the enterprise implementation data comprises:
capturing the first portion of the enterprise implementation data; and
generate, based at least in part on applying the first portion of the enterprise implementation data to a wearable device machine learning model, wearable enterprise operations data; and
initiating performance of one or more wearable enabled enterprise operations actions based at least in part on the wearable enterprise operations data.

12. The enterprise operations system of claim 11, wherein the wearable device machine learning model comprises a wearable device large language model.

13. A method comprising:
receiving server enterprise operations data from an enterprise operations server;
receiving at least a first portion of enterprise implementation data from at least one of one or more edge supported wearable devices;
generating, at least in part on applying the server enterprise operations data and the enterprise implementation data to a composite edge enterprise operations machine learning model, edge enterprise operations data; and
initiating performance of one or more edge enabled enterprise operations actions based at least in part on the edge enterprise operations data.

14. The method of claim 13, wherein the composite edge enterprise operations machine learning model comprises an edge audio processing machine learning model.

15. A computer program product comprising at least one non-transitory computer-readable storage medium having computer-readable program code portions stored therein, the computer-readable program code portions comprising an executable portion configured to:
receive server enterprise operations data from an enterprise operations server;
receive at least a first portion of enterprise implementation data from at least one of one or more edge supported wearable devices;
generate, based at least in part on applying the server enterprise operations data and the enterprise implementation data to a composite edge enterprise operations machine learning model, edge enterprise operations data; and
initiate performance of one or more edge enabled enterprise operations actions based at least in part on the edge enterprise operations data.
